# EUROPEAN PATENT SPECIFICATION

(11) **EP 4 324 005 B1**
(45) Date of publication and mention of the grant of the patent: **17.06.2026**
(21) Application number: 22719502.1
(22) Date of filing: 19.04.2022
(51) Int. Cl.: G21G 1/06, G21G 1/10, H05H 6/00

(54) **A NUCLEAR TARGET, METHOD FOR INDUCING A NUCLEAR REACTION AND A DEVICE SUITABLE FOR CARRYING OUT THE METHOD**
NUKLEARES TARGET, VERFAHREN ZUR INDUKTION EINER KERNREAKTION UND VORRICHTUNG ZUR DURCHFÜHRUNG DES VERFAHRENS
CIBLE NUCLÉAIRE, PROCÉDÉ POUR INDUIRE UNE RÉACTION NUCLÉAIRE ET DISPOSITIF APPROPRIÉ POUR LA MISE EN OEUVRE DU PROCÉDÉ

(30) Priority: 16.04.2021 CZ 20210189; 04.06.2021 LU 102817
(43) Date of publication of application: 21.02.2024
(73) Proprietor: The Extreme Light Infrastructure ERIC, 252 41 Dolni Brezany (CZ)
(72) Inventor: RIDKY, Jan, 25241 Dolní Brezany (CZ); KORN, Georg, 25241 Dolní Brezany (CZ)
(74) Representative: Bauer, Karel
(86) International application number: PCT/CZ2022/050041
(87) International publication number: WO 2022/218452

(56) References cited:
- EP-A1- 0 990 238
- US-A- 5 870 447
- US-A1- 2005 084 055
- US-A1- 2011 002 431
- US-A1- 2016 172 065

## Description

### Technical field

The present invention relates to a nuclear target, a method for inducing a nuclear reaction by means of the nuclear target and controlled nuclear reactions. In a preferred embodiment, the method for creating isotopes is performed using a laser-driven accelerator.

In another embodiments, the present invention relates to exothermic nuclear reactions and a method for converting nuclear energy into heat, a method for creating radioisotopes, in particular radiopharmaceuticals, and a method for treating burnt nuclear fuel, more specifically, a method for transmutation of nuclear fission products.

In another embodiment, the present invention relates to a device capable of carrying out the methods disclosed herein.

### Background of the Art

There are plurality of radioisotopes that are currently being utilized in medicine, energetics or diagnostic methods using ionizing radiation. Some radioisotopes, in particular those used in medicine, often have a relatively short half-life. Therefore, there is a general need for a method for producing radioisotopes either at the particular place, where they are intended to be utilized, or at a place in relatively close distance. On the other hand, the products of fission reactions of ²³⁵U have a half-life of several decades. Therefore, there is a need for a method for transmuting radioactive material (waste) that is the final product of a fission nuclear reaction, preferably treating the waste at the place where they originated, or at a place relatively close thereto.

There is also a continuing need to provide a clean energy source. One way to achieve such a clean energy source is to use exothermic nuclear reactions. According to the state of the art, there are two technical directions how to achieve energy production therefrom. One is nuclear fission, the other is nuclear fusion.

Laser is commonly used in industrial, scientific, and engineering applications. However, it is still new to controlled nuclear reactions, as there is still a number of technical gaps that need to be addressed.

US 2016/0172065 discloses a nuclear target, system and method for creating isotopes thereof. The target contains a hollow, wherein a laser beam is focused into the hollow, creating plasma on the surface of the nuclear target. The target is then, but still during the plasma state, irradiated with a beam of projectile particles, such as protons. The target material and the type of particles are chosen according to the need of the nuclear reaction. Disclosed examples are, for example, ¹⁴N(p,α)¹¹C; ¹¹B(p,n¹¹C; ¹⁸O(p,n)¹⁸F; ²⁰Ne(d,n)¹⁸F - as disclosed by the patent application; ¹⁶O(p,α)¹³N; ¹³C(p,n)¹³N; ¹⁴N(d,n)¹⁵O; ¹⁵N(p,n)¹⁵O.

According to US 2016/0172065, the system comprises:
1) means configured to convert the target to a plasma state; e.g. laser or z-pinch;
2) a particle source set to irradiate the target into the plasma state by particles which induce the above-mentioned nuclear reactions; and
3) isotope recovery means configured to recover isotopes generated by nuclear reactions.

The use of the system according to US 2016/0172065 is exclusively disclosed for the creation of radioisotopes. The present solution is also very energy-demanding and lossless energy generation is impossible in the context of the present state of the art.

Another disclosed solution for generating high-energy particles for controlled nuclear reactions using a high-intensity laser is US 2002/0172317. The apparatus contains two planar targets. The primary target, containing a thin Mylar film, is irradiated with a laser beam. Upon laser bombardment, the first target emits energetic particles, such as protons or deuterons, emitted towards the secondary target. The secondary target contains ¹⁰B, thereby inducing nuclear reactions due to proton or deuteron radiation emitted from the primary target.

An example of a disclosed nuclear target, apparatus and method for controlling fusion nuclear reactions is EP2833365. The target is planar and comprises two layers. The first layer comprises hydrogen-enriched silicon so that protons are emitted into the second layer upon the laser pulse irradiation. The second layer comprises boron, which in certain embodiments induces an exothermic nuclear reaction.

There are also capsule-shaped targets, as disclosed, for example, in US20120114088, wherein a compression of the envelope of the nuclear target occurs as a result of the mechanism of the laser radiation. Once atomic nuclei reach a certain distance, they fuse within a given target.

However, the above mentioned solutions provide low efficiency in the manufacturing of radioisotopes, since the target must always be supplied with a substantial part of energy, e.g. by means of laser radiation and/or external heating. In the case, in which the device is to lead to the fusion of nuclei, it is technically difficult to achieve the desired density of the generated plasma. Due to the growing application of radioisotopes in various fields of technology, there is a growing need for their generation using controlled nuclear reactions. The technical problem, which the present invention solves to a certain extent, lies in the method of more efficient generation of radioisotopes, or a more effective method for inducing a nuclear reaction.

### Description of the Invention

The first embodiment of the present invention relates to a nuclear target suitable for increasing the efficiency to induce nuclear reactions, and thus also for the production of radioisotopes, in particular radiopharmaceuticals, or transmutation of burnt nuclear fuel and/or as means able to effectively induce exothermic nuclear reactions with significant thermal energy production.

The nuclear target according to the present invention, and as defined by claim 1, has the character of a bulk of material, comprising a hollow, wherein the shape of the hollow is preferably optimized with respect to the intention of the secondary nuclear reactions. The nuclear target is made of material comprising precursors. In a certain embodiment, the precursor may be implanted in the solid material of the target, while in another embodiment, the precursor may be placed in the hollow of the target in solid (e.g. powder), liquid, or gaseous form. In another embodiment, at least part of the nuclear target consists of the precursor. In another preferred embodiments, it is possible to combine the localization of the precursors as mentioned above, i.e. to provide powder precursor into the hollow of the nuclear target, while at least part of the nuclear target surrounding the hollow consists of the same or further precursor. The precursor is formed by a specific predetermined isotope which, upon collision with a projectile particle, forms the desired product of a nuclear reaction, such as a radioisotope. The material of the nuclear target, more specifically the precursor, or a plurality of precursors, is selected for the nuclear reaction of the precursor(s) and the projectile particle(s) to achieve the final product(s), most often radioisotopes. The nuclear target further comprising at least one opening for the passage of a beam of projectile particles. The nuclear target is further equipped with a hollow in the bulk of the material located behind the opening, used for the incidence of projectile particles. Projectile particles passing through the opening and incident on the hollow of the bulk of the material are either elastically scattered on at least one nucleus/nuclei of the isotope in the hollow, or the desired nuclear reaction with the isotope occurs depending on the energy of the projectile particle. Some projectile particles may be reflected back - out of the hollow, wherein the reflected particles generate losses. Losses can be minimized by the shape of the hollow, in particular, the geometry - by the position of the opening and the hollow. The elastic scattering of projectile particles on isotopes/nuclei in the hollow provides at least two technical effects. The first technical effect leads to the dissipation of energy inside the hollow, and thereby to the heating of the nuclear target material. The second technical effect relates to the transfer of kinetic energy to the target/isotope nuclei, which can thus exceed the threshold energy of the desired reactions.

The above-mentioned technical effects then provide a synergistic technical effect relating to the increased efficiency of radioisotope production or the yield of another desired nuclear reaction, for example the frequency of exothermic reactions or transmuted nuclei.

As mentioned above, the nuclear target is formed by a bulk of material, wherein the shape of the hollow is optimized with respect to the course of the desired nuclear reactions. In a certain embodiment, the bulk of the material can be a single bulk. In another embodiment, the single bulk can be divided into a plurality of segments. In another embodiment, the opening of the target facing the hollow may be slightly curved and/or contain a texture, in particular on the inner side of the hollow. However, the nuclear target must always contain at least one opening, preferably only one opening, for having projectile particles enter into the hollow of the nuclear target. Thus, the hollow of the nuclear target is never completely surrounded by the material containing the precursor(s) and isotopes on which the projectile particle is elastically scattered. The above preferred embodiment of only one opening provides the advantage of effectively trapping the scattered projectile particles, secondary particles and precursor particles accelerated by them. The probability of projectile particles escaping from the hollow, due to backscattering, can be minimized by a suitable geometry of the shape of the hollow.

The hollow can be of any shape. In a certain embodiment, the shape of the hollow may be part of an ellipsoid or a sphere. The optimized shape of the hollow, preferably of a more complex shape, can be generated by means of segments, which form a single bulk upon their connection. The hollow comprises at least two parts. The first part consists of a narrower passage, while the second part consists of a wider and larger space. The first part can be in the shape of a cylinder, block or polyhedron, while the second part then follows seamlessly in the shape of a part of an ellipsoid, sphere or, for example, polyhedron. The geometry of the hollow, which is divided into at least two parts, offers the technical advantage of effectively trapping the projectile particles in the hollow, while considerably limiting the backscattering of the same. In a more preferred embodiment, the cross-sectional size of the first part of the hollow corresponds to the transverse size of the beam of projectile particles.

In the context of the present invention, a precursor refers to an atomic nucleus that interacts with a projectile particle, in particular there is a collision of a projectile particle with the atomic nucleus, with the interaction resulting in an induced nuclear reaction. The end or intermediate product may be a radioisotope that further decays, for example, by an alpha, beta, and/or gamma decay, wherein the decay is further utilized in a particular industrial application. Intermediates may also be neutrons necessary for achieving the desired nuclear reactions. In a certain embodiment, the precursor may be implemented in the material, for example, by ion-atom implementation, or CVD, or PVD by atomic deposition onto a substrate. In another embodiment, the nuclear target can consist of precursor material surrounding the hollow, wherein at least one isotope, on which a projection particle is scattered, is presented in the material of the nuclear target. In another embodiment, the precursor may form part of the hollow so as to fill the precursor to a certain volume. In another embodiment, the precursor may be included in both the material and the cavity filling. In this case, the precursor need not necessarily be one particular, but the first precursor may be implemented in the wall of the hollow or can form the hollow, while the second precursor may be part of the filling. The precursor may be, for example, ¹⁰B; ¹¹B; natural mixture of boron; ¹³C; ¹⁴N; ¹⁵N; ¹⁶O; ¹⁸O; ²⁰Ne; radiopharmaceuticals of ⁹⁹Mo,¹⁸⁶W, fission reaction products, ²³³U,²³⁶U,²³⁹Pu. In a certain embodiment, the bulk of the material of the nuclear target can be manufactured from the respective precursor material.

Projectile particles are particles that bombard the nuclear target. Projectile particles can be, for example, protons, neutrons, deuterons, α-particles, light ions - for example ¹⁴C, ¹⁶O, medium-heavy ions (e.g. ²⁷Al) or even heavy nuclei such as ¹⁹⁷Au in case of use and depending on the material of the laser target. Projectile particles can be produced by state-of-the art accelerators or can be emitted by radioisotopes, e.g. AmBe or PuBe or can be produced by laser driven accelerator.

The isotopes, on which elastic scattering with the projectile particles occur, may be the nuclei of the nuclear target, nuclei of the precursor and nuclei of the secondary products of the reactions already occurred if the energy of the projectile particles does not correspond to the resonant width of the allowed channels. If the precursor is not implemented in the material of the nuclear target, it is desirable that the possible reaction of the projectile and secondary particles with the nuclear target nuclei is the elastic scattering. These particles are thus partially reflected back and can interact with the nuclei of the precursor. For example, a tungsten nuclear target contains ¹⁸⁰W, ¹⁸²W, ¹⁸³W, ¹⁸⁴W and ¹⁸⁶W isotopes, wherein, in the case of protons as projectile particles with a proton energy of up to 6 MeV, practically only elastic scattering occurs. The energy of the protons can dissipate through a multiple elastic scattering until it reaches resonant energy of some possible reaction with the precursor.

The induced nuclear reaction in the context of the present invention may be a nuclear transmutation, a spallation or fission nuclear reaction, a fusion reaction, or a compound nucleus reaction. Examples of suitable induced nuclear reactions are given below.

In a preferred embodiment, the nuclear target is further equipped with a laser target emitting projectile particles upon laser irradiation. The laser target can preferably be placed on the nuclear target opening. In another embodiment, the laser target may be positioned in front of the opening of the nuclear target to create space between the laser target emitting the projectile particles and the nuclear target opening. The space can be preferably used to filter out other particles formed by the laser irradiation of the laser target. In another embodiment, the opening between the laser target and the nuclear target may be closed and filled with a fluid, such as a fluid containing precursor nuclei. The embodiment disclosed above with the laser target further provides an advantage in the case of a nuclear target material comprising an electrically conductive material. A laser pulse emitted by, for example, a high-power pulsed laser may cause the generation of an electric current inside an electrically conductive nuclear target. In this case, the inset of the laser target is preferably in terms of a certain isolation of electromagnetic radiation affecting the electrically conductive nuclear target. In one embodiment, the parameters of the laser pulse can be taken from EP2833365.

In a certain embodiment, the material of the nuclear target may be suitably selected to consist only of a material containing exactly two isotopes. The first isotope is a precursor, and the second isotope is an isotope on which projectile particles are elastically scattered. The technical advantage of this embodiment is that only two interactions occur in the hollow of the nuclear target immediately after irradiation. The first interaction induces a nuclear reaction of the precursor with the projectile particle. The second interaction represents elastic scattering of the projectile on the isotope. Thus, the efficiency of induction of the nuclear reaction or production of radioisotopes is enhanced. After some time, however, due to the nuclear interaction with the precursor, the products hereof appear, also entering into the ongoing interactions.

In another embodiment, the laser target material can be preferably selected to comprise multiple isotopes. If a laser target consists of multiple isotopes, their emitted ions forming projectile particles will interact with the nuclear target in a certain sequence. This can be used to influence the kinetics of the ongoing reactions. The above sequence of incident projectile particles providing a sequence of induced nuclear reactions in the hollow of the nuclear target can be ensured by making a nuclear target provided with an inset laser target. The size of the inset can be advantageously selected according to reaction kinetics.

In accordance with the IAEA convention, hereinafter, we will use the so-called abbreviated notation of nuclear reactions, i.e. the reaction projectile *P* + target *T* → emitted particle *X* + residual nucleus *R* as T (P, X) R. The isotopes ¹H, ²H, ³H and ⁴He are accordingly labelled, when they act in the reaction as a target, i.e. a precursor, or a residual nucleus. ²H and ³H are sometimes labelled in accordance with the convention as *D* and *T,* respectively. If the isotopes ¹H, ²H, ³H and ⁴He appear as projectile or emitted particles, we will denote them in accordance with the convention of *p, d, t* and *α,* respectively. Other isotopes are labelled by default in all roles in the reaction.

In another preferred embodiment, the inner wall of the hollow is provided with a layer comprising material emitting secondary projectile particles, which are emitted from this layer upon the interaction of the primary projectile particle or another particle with sufficient momentum. In another embodiment, the hollow can be provided in its volume, with a material capable of emitting secondary projectile particles upon an interaction of the projectile and/or another particle. The above approaches may also be combined. Examples of such materials are: ¹H, ²H which, for practical reasons, may be present in the form of compounds, e.g. polyethylene or HDPE (high density polyethylene). The inner wall of the hollow does not have to be entirely covered with this layer; only a covered part is sufficient. The advantage of this embodiment is the chain growth of the projectile particles in the hollow. The primary projectile particles and the secondary projectile particles need not be the same. For example, the primary projectile particle may be a proton and the secondary projectile particle may be, for instance, an alpha particle or a neutron.

In another preferred embodiment, the nuclear target can be provided with a plurality of openings following on the corresponding plurality of hollows. This preferred embodiment represents an advantage in the continuous operation of induced exothermic nuclear reactions and/or the production of radioisotopes. The nuclear target can be placed on a motorized holder which moves with the nuclear target in any direction and/or rotates it. As soon as a sufficient amount of radioisotopes is produced according to the corresponding induced nuclear reaction, or the entire precursor in the hollow of the nuclear target is consumed, the nuclear target is moved so that the incident projectile particles fall into the next hollow or hollows containing still unconsumed precursor.

In another preferred embodiment, the material of the nuclear target or the precursors may be selected according to the respective industrial application. In a certain embodiment being advantageous for radioisotope production, the following precursors ¹¹B, ⁹⁸Mo, ¹⁸⁶W, or a mixture of precursors ⁹⁸Mo and ²H, may be selected. In another embodiment being advantageous for the production of isotopes suitable for diagnostic methods using ionizing radiation, precursors may be selected from the following group of ¹⁸⁵Re, ¹⁸⁷Re or a natural mixture of ^{Nat}Re. In another embodiment being advantageous for industrial applications of spent nuclear waste transmutation, a nuclear target precursor is selected, or the material of the nuclear target is made up of isotopes with a longer half-life. Such isotopes include the fission products of ²³³U, ²³⁵U, ²³⁹Pu. In this case, it is also suitable to use as an additional precursor a material also providing neutrons after being irradiated with projectile particles, e.g. ²H upon irradiation with protons or ³H upon irradiation with deuterons. In another embodiment, preferred for the conversion of nuclear energy into heat, ²H, ⁶Li, ⁷Li, ¹⁰B, ¹¹B, ¹⁵N or a mixture thereof is selected as the precursor.

In another preferred embodiment, a luminophore or scintillator can be applied to the opening and/or into a part of the hollow. The luminophore, or scintillator, brings a dual technical function. The first function consists in controlling the emission of radioactive particles from the hollow of the nuclear target. Emissions of radioactive particles need not necessarily be subatomic or atomic particles but may also form a macroscopic part of the hollow which, due to the reaction mechanism, has ejected part of the material out of the hollow. The second technical function consists in controlling the focusing of the beam of projectile particles and the deposition thereof into the hollow of the nuclear target, or in controlling the optimal shape of the same.

A second embodiment of the present invention relates to a method for inducing a nuclear reaction as defined by claim 11. The method according to the present invention is fully universal and can be applied to a number of industrial issues, which are mentioned above.

The method includes a step of providing a beam of projectile particles incident on a nuclear target from a precursor-containing material bulk. The nature of the invention for carrying out this method is characterized in that the beam of projectile particles is focused into the hollow of the nuclear target, with the projectile particles being elastically scattered on the nuclei of at least one isotope inside the hollow; the elastic scattering preferably occurs on the isotopes contained in the hollow fill and/or on the isotopes of the wall of the nuclear target. The projectile particles are elastically scattered until they induce a nuclear reaction on the precursor, or until the occurrence of an interaction between the projectile particle and the precursor.

In a preferred embodiment, the projectile particles are generated in a laser-controlled accelerator. A laser-controlled accelerator is generally considered to be a more compact and cheaper option compared to commonly used accelerators.

In another preferred embodiment, radiopharmaceuticals can be produced by the method of the invention, wherein the projectile particles and precursors are selected according to the following nuclear reactions ¹¹B(p,n)¹¹C, ⁹⁸Mo(p,n)^{99m}Tc, ¹⁸⁶W(p,n)¹⁸⁶Re or a mixture of precursors ⁹⁸Mo and ²H to induce simultaneous reactions of ²H(d,n+p)²H and/or ²H(d,n)³He with a subsequent reaction of ⁹⁸Mo(p,n)^{99m}Tc and ⁹⁸Mo(n,γ)^{99m}Tc, when using projectiles d. Reactions of ¹⁸⁶Re(n,γ)¹⁸⁶Re , ¹⁸⁷Re(n,γ)¹⁸⁸Re are also possible, again in a preferred embodiment using deuterium as a projectile particle, more preferably deuterium generated from a laser target and/or deuterium present in the hollow of the nuclear target and activated by an elastic collision with any projectile particle.

In another preferred embodiment, the nuclei of the spent nuclear waste can be transmuted by the method, wherein the projectile particles and precursors are selected according to the following nuclear reactions ²³³U(p,fission), ²³⁵U(p,fission), ²³⁹Pu(p,fission), and, in particular, ²³³U(n,fission), ²³⁵U(n,fission), ²³⁹Pu(n,fission), or ^{so}Co(n,γ)⁶¹Co. During fission induced by neutrons, neutrons must be produced by the interaction of neutrons as projectile particles with the precursor. In a certain embodiment, neutron production can be achieved, for example, by an additional projectile particle and a precursor containing deuterons. In the interaction of the particles of this embodiment, reactions of ²H(d,n)³He and/or ²H(d,n+p)²H, or ²H(d,p)³H and subsequently of ²H(t,n)⁴He occur, or the precursor will contain tritium ³H, wherein a reaction of ³H(d,n)⁴He occurs.

In another preferred embodiment, nuclear energy can be converted into heat by the method, wherein the projectile particles and precursors are selected according to the following nuclear reactions ³He(d,p)⁴He, ⁶Li(d,α)⁴He, ⁷Li(p,α)⁴He, ¹⁰B(p,α)⁷Be, ¹¹B(p,2α)⁴He, ¹⁶N(p,α)¹²C or ⁶Li(p,³He)⁴He followed by secondary reactions ⁶Li(³He,2α)¹H a ³He(³He,2p)⁴He. Other possible reactions include ³H(d,n)⁴He, ²H(t,n)⁴He, ²H(n,γ)³H, ⁶Li(n,³He)⁴He, ¹⁰B(n,α)⁷Li, ⁷Be(n,p)⁷Li, ¹³C(n,γ)¹⁴C, ¹⁴N(n,p)¹⁴C, ¹⁷O(n,α)¹⁴C, ²¹Ne(n,α)¹⁸O, ²²Na(n,p)²²Ne or ³⁷Ar(n,α)³⁴S. In a more preferred embodiment, heat is conducted from the nuclear target using a heat exchanger.

A third embodiment of the present invention relates to a device suitable, i.e. not exclusively used, for carrying out the method according to the second embodiment of the present invention, or preferred embodiments. The device is defined in claim 18.

The device comprises a projectile particle source and a nuclear target according to the present invention, wherein the projectile particle source is configured to deposit projectile particles into the hollow of the nuclear target according to the present invention.

In a preferred embodiment, the device comprises a nuclear and a laser target, wherein the nuclear target is a nuclear target according to the present invention and the laser target is capable of emitting projectile particles upon laser pulse strike. The laser target can be solid-state, such as the laser target disclosed in EP2833365, or a gas jet target can also be used, using the laser-wakefield acceleration phenomenon.

In other preferred embodiments, the device is configured to carry out the methods according to the present invention.

### Description of the Drawings

FIGs. 1a - 1f are schematic illustrations of the first embodiment of a nuclear target according to the present invention in various alternatives of precursor placement in the target.
FIGs. 2a and 2b are schematic illustrations of the second preferred embodiment of a nuclear target according to the present invention with the first and second part of the hollow.
FIGs. 3a, 3b and 3c are schematic illustrations of another preferred embodiment of a nuclear target according to the present invention comprising a laser target capable of generating projectile particles, wherein Fig. 3b illustrates a more preferred embodiment with an inset laser target, Fig. 3c illustrates a preferred embodiment comprising a precursor in a liquid or gaseous form, where the precursor is contained in the hollow of the nuclear target.
FIG. 4 is a schematic illustration of an embodiment of a nuclear target hollow according to the invention, wherein the hollow is equipped with a layer emitting secondary projectile particles upon interaction with the primary projectile particle.
FIG. 5 is a schematic illustration of an embodiment of a continuous band provided with nuclear targets according to the present invention.
FIGs. 6a and 6b are schematic illustrations of an embodiment of a nuclear target provided with a luminophore.
FIG. 7 is a schematic illustration of an embodiment of a nuclear target in combination with a heat exchanger.
FIGs. 8a - 8e illustrate different embodiments of a nuclear target hollow geometry according to the invention.
FIGs. 9a and 9b are schematic illustrations of a device comprising a laser-controlled accelerator generating projectile particles comprising a nuclear target according to the invention.
Figs. 10a and 10b are schematic illustrations of the nuclear target according to the present invention used in an experiment.
Fig. 11 represents post-experimental analysis of the hollow of the nuclear targets #1, #2 and #6 according to the present invention.
Fig. 12 represents post-experimental analysis of the height profile of the nuclear targets #1, #2 and #6 according to the present invention.

### Detailed description of the embodiments

Radioisotopes are produced by bombarding or irradiating a nuclear target **1** comprising precursor(s) **21** or **22** and/or **23.** Precursor **21** and/or **22** and/or **23** refers to, and is generally known in the art, an atomic nucleus that interacts with a projectile particle **3** to achieve the final product. The final product is often an unstable radioisotope that further decays by alpha, beta and/or gamma decay. The generation of products by induced nuclear reactions according to the present invention takes place substantially inside the hollow **12** of the nuclear target **1,** wherein at least a portion of the precursors **21** and/or **22** and/or **23** present/comprised in the hollow **12** interact with projectile particles **3** and form the final product by nuclear reactions. In most cases, the product formed, most often a radioisotope, is consequently mixed with another material forming the nuclear target **1,** wherein the untransformed precursor **21** and/or **22** and/or **23** remains randomly distributed in said nuclear target **1.** Certain portion of the converted precursors **21** and/or 22 and/or **23** to the final product(s) can be separated using chemical methods. An example of a chemical method for separating converted radioisotopes consists in dissolving the nuclear target **1,** or the content of the hollow **12** of the target **1,** in a strong acid, followed by filtration of radioisotopes and precipitation thereof.

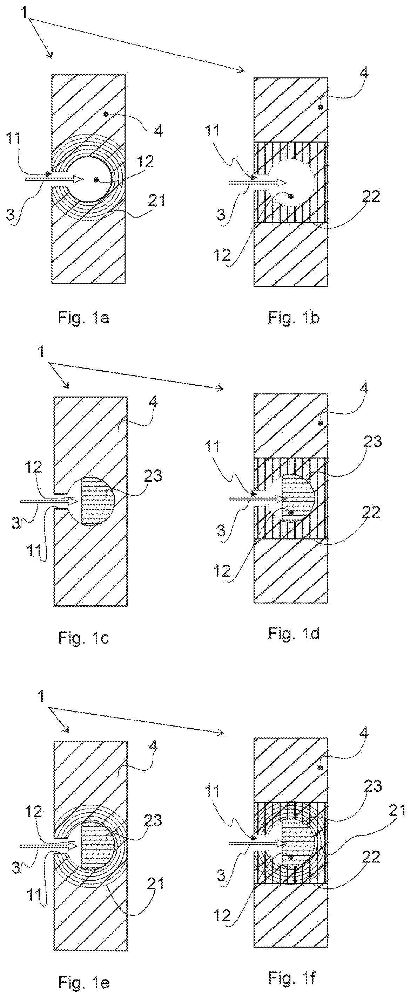

The nuclear target **1** according to the present invention comprises at least one nucleus of the precursor **21** or **22** in the envelope of the nuclear target **1** and/or the precursor **23** inside the hollow **12,** which is transformed into the product nucleus by the nuclear reaction; and an isotope **4** on which the projectile particle **3** is elastically scattered until the interaction with the nucleus of the precursor **21** and/or **22** and/or **23.** In the case of the example according to FIG. 1a - f, the precursor **21** and/or **22** or the precursor **23** itself can be the isotope **4** until the kinetic energy of the projectile particle **3** equals the energy of a reaction channel. Examples of such materials may include, for example, ¹⁰B as the nucleus of the precursor **21** and/or **22** and/or **23,** p as the projectile particle **3,** wherein the isotope **4** on which the projectile particle **3** is elastically scattered is one of the stable isotopes **4** W (¹⁸⁰W,¹⁸²W,¹⁸³W,¹⁸⁴W,¹⁸⁶W; or a natural mixture thereof, in accordance with FIG. 1a), and wherein the resulting nuclear reaction is ¹⁰B(p,α)⁷Be. In another example, ¹¹B(p,α)⁸Be can be selected, wherein ⁸Be further decays according to ⁸Be → 2α, with the W isotopes **4** being used as nuclei on which the projectile particles **3** are elastically scattered. Another example may include a nuclear reaction of ⁹⁸Mo(p,n)^{99m}Tc, wherein the isotopes **4** on which the projectile particles **3** are elastically scattered are W isotopes **4** forming the envelope of the nuclear target **1.** In another embodiment, it is possible to place the precursor **21** or **22** into the body of the nuclear target **1,** for examples, as part of the envelope of the hollow **12** (Figs. 1a, 1b, 1d, 1e and 1f), and/or place it in the hollow **12** of the nuclear target **1** (Figs. 1c, 1d, 1e and 1f). It is also possible to combine the above placements of the precursors **21** and/or **22** and/or **23b** as schematically illustrated in Fig. 1d - 1f.

According to another example of an embodiment, the nuclear target **1** may contain a natural mixture of boron, i.e. 20% of ¹⁰B and 80% of ¹¹B, as the nuclei of the precursor **21** and/or **22** and/or **23.** Figure 1a schematically illustrates the ordered distribution of the precursors **21** corresponding in cross-section to the circles. In this embodiment, the respective precursors **21** can be implanted into the body of the nuclear target **1** using various chemical-physical processes such as chemical or physical vapour deposition (CVD or PVD, respectively). Figure 1b schematically illustrates a situation where the precursor **22** is deposited in a defined area and forms a bulk of a material with a hollow **12.** Figure 1c illustrates an embodiment where the precursor **23** is placed directly into the hollow **12** of the nuclear target **1,** i.e. the precursor **23** is not implanted in the material of the nuclear target **1,** but is placed in a part of the hollow **12** of the nuclear target **1** and is used as a fill in the hollow **12.** The precursor **22** can also be placed directly into the hollow **12** of the nuclear target **1** using known methods of PVD, CVD or ion implantation or as a bulk of the material. Figure 1d schematically illustrates a possible combination of the placement of the two precursors **22** and **23.** Similarly, it is possible to provide an embodiment according to Fig. 1e, where precursors **21** and **23** are present, wherein the first precursor **21** forms part of the material bulk. The second precursor **23** is placed in the hollow **12.** The first and second precursors **21** and/or **22** and **23** according to Fig. 1f can be the same isotope. In another embodiment, the isotopic composition of the first and second precursors **21** and/or **22** or **23,** respectively, differs according to Fig. 1f. The preferred embodiment according to Fig. 1d - 1f can be used in particular in the field of heat production by means of a fission nuclear reaction. In this preferred embodiment, the nuclear target **1** may comprise in the envelope precursors **21** and/or **22** containing, for example, the isotopes ²³³U, ²³⁵U and ²³⁹Pu. At the same time, the nuclear target **1** comprises a hollow **12,** which is filled with the precursor **23,** serving at least partially as a fill. The second precursor **23** may be ³H or LiD to emit neutrons capable of initiating a fission nuclear reaction onto the precursor **21** and/or **22** when interacting with the projectile particle **3.** Finally, exothermic nuclear reactions occur as a result of interactions of the above-selected precursors **21** and/or **22** and **23** with the projectile particles **3.**

In another embodiment, the nuclear target **1** can be enriched, for example a target having ¹⁰B with up to 90% in concentration, thereby inducing an appropriate reaction scheme according to the nuclear reaction mentioned above. It is also possible to select the distribution of precursors **21** and/or **22** and/or **23,** e.g. a higher concentration of precursors **21** and/or **22** and/or **23** at the edges of the nuclear target **1** in accordance with its intended use. It is also possible to use two types of precursors **21** and/or **22** and/or **23,** or a simultaneous placement, for example, the arrangement according to Fig. 1d - 1f.

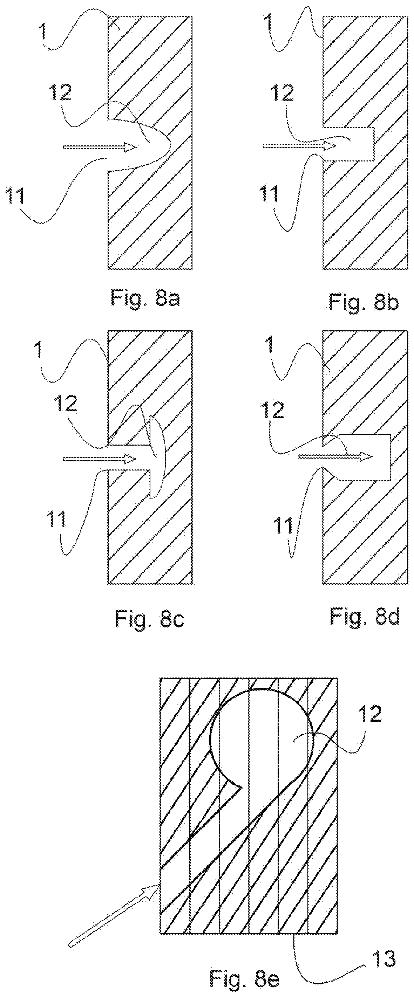

The nuclear target **1** may be substantially of a planar shape, being provided with an opening **11** and a hollow **12** in a bulk of material located behind the opening **11.** The hollow **12** can take any shape. Figures 1a - 1d illustrate schematic cross-sections of the nuclear target **1,** where a part of the cross-section of the hollow **12** corresponds substantially to the shape of a circle. In another embodiment, e.g. according to Figures 8, the cross-sectional shape of the hollow **12** may correspond to a section of an ellipse, rectangle, mushroom or polygon with a tapered opening **11.** However, the nuclear targets **1** always comprise openings **11** for projectile particles **3** to pass into the hollow **12** of the nuclear target **1.**

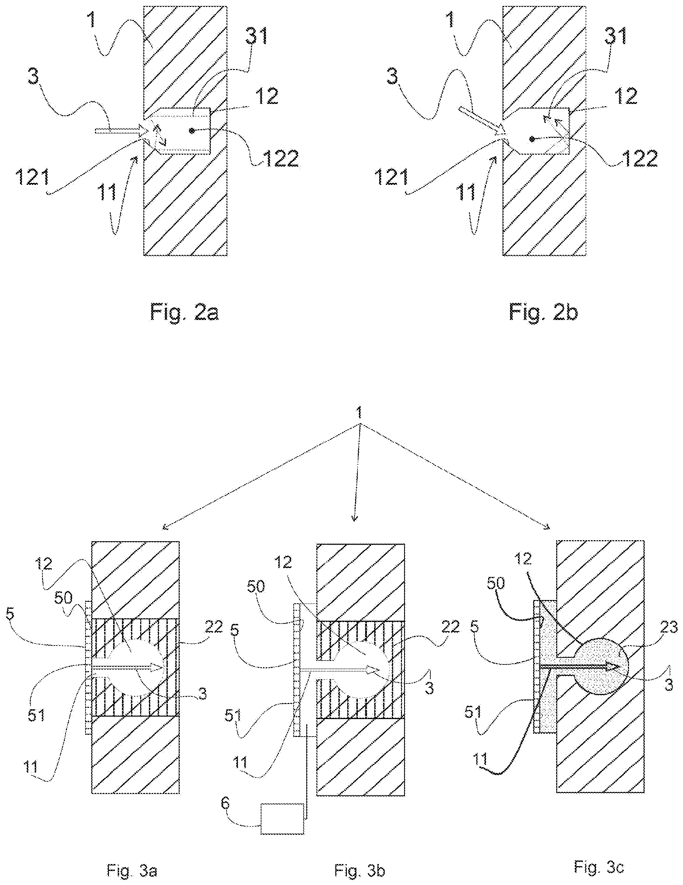

According to the invention, schematically illustrated in Fig. 2a, the hollow **12** is formed of two parts. The first part **121** represents a narrower part of the hollow **12** through which the projectile particle **3** passes. In the second part **122** of the hollow **12,** which is more voluminous than the first part **121,** the projectile particle **3** is deposited and elastically scatters on the nuclei of isotopes **4** or induces a nuclear reaction on a particular precursor **21** and/or **22** and/or **23.** The advantage of the narrower part **121** of the hollow **12** of the nuclear target **1** is to minimize backscattered particles **31** emanating from the nuclear target **1** outside the area of the hollow **12.** Another advantage of the hollow **12** having parts **121** and **122** is characterized in that it is not necessary for the beam **3** of projectile particles **3** to be focused perpendicularly to the nuclear target **1.** The beam of projectile particles **3** can be deposited into the hollow **12,** e.g. according to Fig. 2b under particular angle. The elastic scattering of the projectile particles **3** in the hollow **12** ensures a sufficient amount of trapped projectile particles **3** to induce a sufficient number of nuclear reactions on the precursors **21** and/or **22** and/or **23.**

The opening **11** of the nuclear target **1** serves for the entry of projectile particles **3,** such as protons, deuterons, light nuclei, which can be accelerated in commonly used particle accelerators. In another embodiment, laser-controlled accelerators may be used. In another embodiment, a collimated beam of projectile particles **3** from static emitters, such as AmBe, RaBe or PuBe, can also be used. In the case of neutrons used as projectile particles **3,** it is also possible to use spallation sources or a collimated beam of neutron coming from a fission reactor. The projectile particles **3** pass through the opening **11** of the nuclear target **1** and are deposited in the cavity **12** thereof. Ideally, there are exactly two possible interactions occurring in the hollow **12.** The first interaction consists of the induced nuclear reaction of the projectile particle **3** with the precursor **21** and/or **22** and/or **23,** wherein the projectile particle **3** and the precursor **21** and/or **22** and/or **23** are suitably selected according to the industrial application. In the latter case of the desired interaction, the projectile particles **3** are elastically scattered on the isotopes **4,** wherein the kinetic energy of the projectile particles **3** is dissipated until the projectile particle **3** interacts with the desired nuclear reaction selected from possible interaction channels and a nuclear reaction occurs on the precursor **21** and/or **22** and/or **23.**

The volume of the nuclear target **1,** the thicknesses of the walls of the nuclear target **1,** the size and shape of the hollow **12,** the distribution of the precursors **21** and/or **22** and/or **23,** and other commonly needed parameters of the nuclear target **1** are appropriately selected according to the desired nuclear reaction and relevant industrial application. Commonly used computer programs can be used to determine the above mentioned parameters.

The final product of the reaction of the projectile particles **3** with the nuclei of the precursor **21** and/or **22** and/or **23** may be, for example, radioisotopes used in radiation therapy, radioisotopes used for imaging in medical applications and/or diagnostics of materials. In another embodiment, the final product may be an isotope having a short and/or medium half-life. In another embodiment, the final product may be a stable isotope made in exothermic nuclear reaction, which can then be converted to heat **9** in a heat convertor **91.**

In the embodiments according to Figures 3a and 3b, the nuclear target **1** may be further equipped with a laser target **5** comprising a layer **50** emitting projectile particles **3,** if the back side **51** of the layer **50** is exposed to laser beams. Thus, a beam of accelerated projectile particles **3** is emitted from the layer **50,** which can be used to induce nuclear reactions in the hollow **12** of the nuclear target **1** according to the present invention. In the embodiment shown in Fig. 3a, a laser target **5** provided with a layer **50** is tightly placed in front of the opening **11** of the nuclear target **1.** After being struck by the laser pulse **52,** projectile particles **3** are emitted directly into the hollow **12** of the nuclear target **1,** where they induce a nuclear reaction or are elastically scattered. Emission of projectile particles **3** can be provided using the TNSA mechanism (M. Roth, M. Schollmeier. Ion Acceleration-Target Normal Sheath Acceleration. Vol. 1 (2016): Proceedings of the 2014 CAS-CERN Accelerator School: Plasma Wake Acceleration, DOI: https://doi.org/10.5170/CERN-2016-001.231). In another embodiment, shown in Fig. 3b, the laser target **5** can be placed to the hollow **12** of the nuclear target **1** inset in front of the opening **11** to accelerate the projectile particles **3** into the hollow **12** of the nuclear target **1.** The advantage of the inset between the laser target **5** and the opening **11** of the nuclear target **1** provides the possibility of placing a vacuum pump **6,** which sucks out the impurities emitted from the laser target **5,** under the influence of the laser pulse **52** and the use of the laser wake field acceleration. A preferred embodiment also presents an offset of the laser target **5** with the layer **50,** providing shielding between the electromagnetic pulse of the laser radiation and the nuclear target **1** in which the material of the nuclear target **1** is electrically conductive, if necessary. In case the projectile particles **3** represent a mixture of isotopes **4,** the inset makes it possible to configure the time sequence in which the projectile particles **3** will hit the precursor **21** and/or **22** and/or **23** and interact with it, or with the products of the interactions of the previous wave of projectile particles **3** with the precursor **21** and/or **22** and/or **23.** Such an exemplary embodiment with a time sequence of the incidence of projectile particles **3** into the hollow **12** can be taken from Torrisi, Lorenzo & Cavallaro, Stefano & Cutroneo, M. & Krasa, Josef & Klir , Daniel. (2014). D - D nuclear fusion induced by laser-generated plasma at 1016 W cm-2 intensity. Physica Scripta. 2014. 014026. 10.1088/0031-8949/2014/T161/014026. The sequence of the incident projectile particles **3** and the interaction with the precursors **21** and/or **22** and/or **23** is provided by more complex laser target **5** configurations, such as the "catcher - pitcher" reported in D. Margarone, et. al. (2020). Generation of α-Particle Beams With a Multi-kJ, Peta-Watt Class Laser System. Frontiers in Physics, September 2020, Vol B, Article 343.

Preferred embodiments provided with a laser target **5** are capable of providing a high-energy beam of hadron particles, such as protons, light nuclei, heavy nuclei (e.g. Au) or neutrons, but also an electron beam without the need for complex beam-transport. The preferred embodiment illustrated in Figs. 3b, inter alia, enables the use of laser-controlled accelerators, which are generally considered as a more compact and cheaper option to conventional accelerators.

Figure 3c further schematically illustrates another embodiment which comprises a nuclear target **1** and a laser target **5.** The area between the laser target **5** and the nuclear target **1** is closed to prevent the exchange of fluids with the surrounding environment. The closed area can then be filled with a liquid or gas containing precursors **23.**

In another preferred embodiment, the material of the laser target **5,** structure and thickness thereof can be selected so that a suitably selected focus of the laser pulse (pulse cross-section) using the TNSA mechanism leads to the production of optimal spectrum of projectile particles, both in intensity and the energy spectrum of the particles. In a certain example of the embodiment, the isotopic composition of the nuclear target **1** is selected to consist of exactly two isotopes. The first isotope is a precursor **21** and/or **22** and/or **23,** which is localized in the envelope and/or hollow **12** of the nuclear target **1.** The second isotope is a nucleus on which the projectile particles **3** are elastically scattered. This embodiment provides an advantage in that immediately after the bombardment of the projectile particles **3,** only the interaction with precursor **21** and/or **22** and/or **23** is allowed, or the projectile particles **3** are elastically scattered on the isotopes **4** until they interact with the nucleus of the precursor **21** and/or **22** and/or **23.** In the next phase, products of ongoing nuclear reactions with projectile particles **3** may also enter the process. These may by, for instance, ions with a smaller mass-to-charge ratio, which reach the hollow **12** with a certain delay, as reported by Torrisi, Lorenzo & Cavallaro, Stefano & Cutroneo, M. & Krasa, Josef & Klir, Daniel. (2014). D - D nuclear fusion induced by laser-generated plasma at 1016 W cm-2 intensity. Physica Scripta. 2014. 014026. 10.1088/0031-8949/2014/T161/014026. Ultimately, the yield of the nuclear reaction increases.

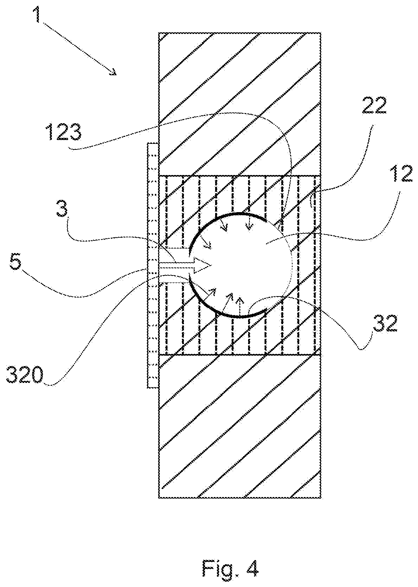

In the example illustrated in Fig. 4, the inner side **123** of the hollow **12** of the nuclear target **1** is provided with a layer **32.** The layer **32** comprises atomic nuclei that are capable of emitting secondary projectile particles **320** after interacting with the projectile particle **3.** Figure 4 represents a specific embodiment provided with a laser target **5.** However, it is clear to the person skilled in the art that the technical function of the layer **32** is completely separable from the technical function of the laser target **5** and can thus be implemented, without any further technical difficulties, in any embodiment, for example according to the figures 1a - 1f and/or 2a, 2b, or advantageous technical effects can be combined with any of the above examples. More specifically, for example, the technical function of the layer **32** according to the embodiment illustrated on Fig. 4 can be used and implemented in the embodiment according to Fig. 2a or 3b, i.e. it is possible to construct the hollow **12** of the nuclear target **1** of the first part **121** and the second part **122** so that the backscattered particles **31** hit the layer 32, or to provide the nuclear target **1** with the layer **32** with a laser target **5.** The technical functions remain completely separable, including the advantages provided. The layer **32** is then capable of emitting additional, secondary projectile particles **320** as a result of the interaction with the primary projectile particle **3.** This preferred embodiment provides a possibility of chain reaction, i.e. releasing more projectile particles **3** into the hollow **12** than originally deposited by the beam of primary projectile particles **3.** Similarly, this advantage can be achieved by a suitable combination of precursors **23** in the hollow **12.** For example, if the laser target **5** is made of high-density polyethylene (HDPE), there will be protons and carbon ions ¹²C among the projectile particles **3.** If hydrogen is also contained in the precursor **21** and/or **22** and/or **23** together with, for instance, ¹¹B, nuclei - protons thereof will be gradually accelerated to an energy of 150 keV and higher by secondary reactions with the projectile, thereby allowing further reactions, e.g. ¹¹B(p,2α)⁴He. The hydrogen nuclei in the precursor **23** will also be accelerated by α-particles formed in previous p¹¹B reactions.

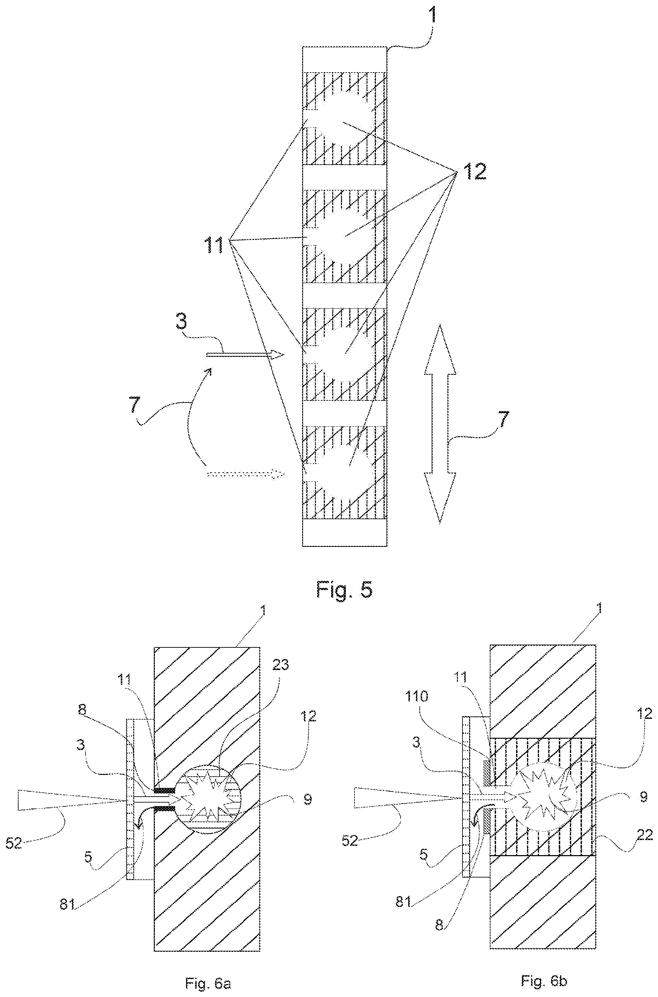

Figure 5 illustrates a band with a plurality of nuclear targets **1** according to the present invention comprising a plurality of openings **11** and hollows **12.** This embodiment represents an advantage in moving the nuclear target **1** in direction **7.** If a certain number of nuclei of precursors **21** and/or **22** and/or **23** are consumed in the volume of the first hollow **12,** the nuclear target **1** is moved in such a direction **7** that the beam of projectile particles **3** falls into the next hollow **12** with the unconsumed precursor **21** and/or **22** and/or **23,** thereby allowing continuity of induction of the nuclear reaction. This example can be used, for example, in the case of exothermic nuclear reactions with a heat exchanger **91** located around the nuclear target **1.** Another advantage of this embodiment is characterized in that the nuclear target **1** can form an endless band which is irradiated by one source of projectile particles **3,** wherein the nuclear target **1** moves in the direction **7** as necessary.

Figures 6a and 6b illustrate an embodiment of a nuclear target **1** which is provided with a luminophore **8** applied on the opening **11.** More specifically, the outer side **110** of the opening **11** is provided with a luminophore **8.** Commonly used luminophores **8,** such as Gd₃Ga₃Al₂O₁₂:CeMg, can be used. Figure 6 illustrates a situation, in which projectile particles **3** are generated from a laser target **5** by means of a laser-controlled accelerator, with the laser pulse **52** being focused on the laser target **5.** The projectile particles **3** are emitted into the hollow **12** of the nuclear target **1,** while interacting with the nuclei of the precursor **21** and/or **22** and/or **23.** In one embodiment, the interaction between the projectile particles **3** and the nuclei of the precursors **21** and/or **22** and/or **23** can be an exothermic nuclear reaction. A circumstance, in which too much gas **9** is released in the hollow **12** of the nuclear target **1** as a secondary product of interactions, may also arise, or due to the not entirely optimal shape of the hollow **12,** such circumstance causes a large backflow of particles against the direction of the pulse **52.** As a result, parts of the inside of the hollow **12** may be torn off and emitted outwards in the direction **81.** The emissions in the direction **81** do not necessarily represent atomic and/or subatomic particles, or backscattered projectile particles **31,** but it may also be small particles visible to the naked eye. Luminophore **8,** in the case of the above scenario, offers a safety function that is able to detect whether a part of the nuclear target **1** has torn off and fell outside the area of the hollow **12.** It is also possible to use this advantageous embodiment when handling dangerous isotopes **4** such as nuclear fission products. The embodiment on Fig. 6a illustrates a luminophore **8,** which may also be mixed with the precursor **23** in the hollow **12.** Similarly, Fig. 6b illustrates the application of a luminophore **8,** which may help optimize the intensity and energy spectrum of projectile particles **3.** This puts the laser beam intentionally out of focus. If the laser is misaligned, the pulse track **52** may not optimally overlap with the opening **11.** The subsequent distribution of the luminophore **8** after irradiation can be used to optimize the internal shape of the hollow **12** according to the purpose of use, e.g. optimizing the shape of the hollow **12** according to Fig. 8. Figure 8e illustrates a preferred embodiment of a shape of a hollow **12** of a nuclear target **1,** wherein the shape of the hollow **12** is optimized so that the back-scattered particles were further reflected into the hollow **12.** The nuclear target **1** according to Fig. 8e is composed of several segments **13** which provide an advantage in manufacturing essentially any shape of a hollow **12** of a nuclear target **1.** The individual segments **13** of the nuclear target **1** are assembled to effectively prevent the scattering of projectile particles **3** outside the area of the hollow **12.** The shape of the hollow is thus optimized against possible nuclear reaction yield losses.

The above-mentioned embodiments can be combined with the preferred nuclear reactions selected in accordance with the use of the present invention. In one embodiment, a nuclear target **1** further provided with a laser target **5** can be used, for example consisting of a layer **50** of polymer (CD₂)ₙ -polyethylene, where hydrogen nuclei are replaced by deuterium nuclei, e.g. according to Torris, L. and Cutroneo, M., "Triple nuclear reactions (d, n) in laser-generated plasma from deuterated targets", Physics of Plasmas, vol. 24, no. 6. 2017. doi: 10.1063/1.4984997. The nuclear target 1 can be made of tungsten and is filled with precursors **21** or **22** and **23** of ⁶LiD and/or ⁷LiD or ^{Nat}LiD. A beam of accelerated deuterons, carbon nuclei and proton admixture, which forms a beam of projectile particles **3** that is emitted from the laser target **5** towards the hollow **12** of the nuclear target **1.** The projectile particles **3** collide with the nuclei of the precursor **21** and/or **22** and/or **23** contained in the hollow **12** of the nuclear target **1.** This induces the respective nuclear reactions inside the hollow **12** of the nuclear target **1,** which in the case of the D-D and Li-D (⁷Li(d,n)⁸Be) reactions produce neutrons. The projectile particles **3,** which do not collide with the nuclei of the precursor **21** and/or **22** and/or **23,** are elastically scattered on the isotopes **4,** or on the nuclei of the products of the occurred reactions of the projectile particles **3** with the precursor **21** and/or **22** and/or **23** until the respective nuclear reaction occurs on precursor **21** and/or **22** and/or **23** or until they stop due to energy loses.

In another example, the laser target **5** may consist of a layer **50** of HDPE. According to this example, accelerated projectile particles **3,** protons, are generated from the laser target **5,** leading to an induced nuclear reaction with the precursor **21** and/or **22** and/or **23** in the form of, for instance, powdered amorphous ¹⁰B and/or ¹¹B or ^{Nat}B. In this example, the following reactions are possible: ¹¹B(p,n)¹¹C with the ongoing parallel reactions of ¹¹B(p,α)⁸Be and ¹⁰B(p,α)⁷Be. The resulting radioisotopes can then be chemically separated, with one of the resulting products, namely ¹¹C, being a pure positron emitter with a half-life of 20 minutes and can be used for medical diagnostics or diagnostics of defects in materials. In another embodiment, the laser target **5** can be a layer **50** of a polymer film (CD₂)ₙ capable of emitting deuterons, wherein ¹⁸⁵Re, ¹⁸⁷Re, or a natural mixture of ^{Nat}Re may be used as the precursor **21** and/or **22** and/or **23** in the nuclear target **1.** Natural rhenium consists of two isotopes, ¹⁸⁶Re and ¹⁸⁷Re in a ratio of 37.4 : 62.6. According to this example, projectile particles **3,** deuterons, are generated from the laser target **5,** and if deuterons are contained in the precursor **21** and/or **22** and/or **23** in the hollow **12** of the nuclear target **1,** the nuclear reactions of ²H(d,n)³He or ²H(d,n+p)²H lead to the production of neutrons and, subsequently, the reactions of ¹⁸⁵Rₑ(ₙ, γ)¹⁸⁶Re, ¹⁸⁷Re(n, γ)¹⁸⁸Re lead to the production of ¹⁸⁶Re and ¹⁸⁸Re radionuclides with half-lives of 90 and 17 hours, used in medicine like ^{99m}Tc.

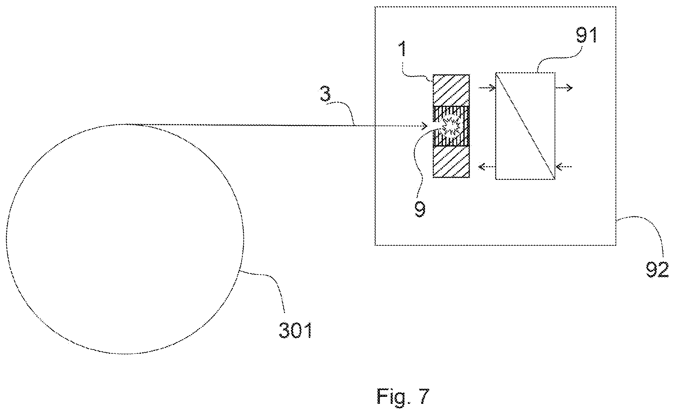

In another example, it is possible to use the reactions ³He(d,p)⁴He, ⁶Li(d,α)⁴He, ⁷Li(p,α)⁴He, ¹⁰B(p,α)⁷Be, ¹¹B(p,2α)⁴He, ¹⁵N(p,α)¹²C or ⁶Li(p,³He)⁴He followed by secondary reactions ³He(⁶Li,2α)¹H and ³He(³He,2p)⁴He for the purpose of inducing an exothermic nuclear reaction. Other possible exothermic nuclear reactions include ³H(d,n)⁴He, ²H(n,γ)³H, ⁶Li(n,³He)⁴He, ¹⁰B(n,α)⁷Li, ⁷Be(n,p)⁷Li, ¹³C(n,γ)¹⁴C, ¹⁴N(n,p)¹⁴C, ¹⁷O(n,α)¹⁴C, ²¹Ne(n,α)¹⁸O, ²²Na(n,p)²²Ne or ³⁷Ar(n,α)³⁴S. The released energy can be converted into heat **9.** Figures 6 and 7 schematically illustrate examples in which heat **9** is generated in a nuclear target **1.** Figure 7 schematically illustrates projectile particles **3** generated from synchrotron **301.** In view of the above preferred embodiments, commonly used projectile particle accelerators **3** can be used as the generator of projectile particles **3.** The projectile particle **3** induces an exothermic nuclear reaction in the nuclear target **1** upon collision with the nucleus of the precursor **21** and/or **22** and/or **23,** in which heat **9** is generated in the hollow **12** of the nuclear target **1.** The heat **9** is then conducted by means of a heat exchanger **91** outside the nuclear target **1.** The heat exchanger **91** can subsequently be connected to a steam generator for generating electrical energy. The nuclear target **1** can be placed together with the exchanger **91** in the containment **92** according to the respective nuclear safety regulations.

In the following examples of the embodiments, the invention discloses methods for inducing nuclear reactions. In a first step, a beam of projectile particles **3** is provided. The projectile particles **3,** in a preferred embodiment, have a spectrum and intensity optimized with respect to the desired reactions. These projectile particles **3** are deposited in the hollow **12** of the nuclear target **1** containing the nuclei of the precursors **21** and/or **22** and/or **23.** The projectile particles **3** either induce a nuclear reaction or are elastically scattered on the isotope **4** of the material from which the nuclear target **1** is made. In a certain step of the method of the invention, after the fuel in the induced reaction is burned up, the radioisotope production method ends or may be repeated; the repetition may occur in the same hollow **12** of the nuclear target **1,** or the nuclear target **1** may be further moved and the projectile particles **3** are focused into a new hollow **12** containing previously unconsumed precursors **21** and/or **22** and/or **23.**

One way to detect the number of nuclear reactions that have occurred on the precursor **21** and/or **22** and/or **23** is to measure the ionizing radiation emanating from the nuclear target **1.** In one embodiment, nuclear reactions ¹⁰B(p,α)⁷Be can be used, thereby detecting gamma radiation from de-excitation of ⁷Be. Monitoring of gamma radiation can then serve as an indicator of the number of induced nuclear reactions.

The accelerated projectile particles **3** can also be positive ions that can induce nuclear fusion or nuclear fission with other materials inside the hollow **12** of the nuclear target **1.**

In a certain example, by combining the materials of the irradiated nuclear target **1,** preferably by generating accelerated projectile particles **3** by means of the laser target **5,** it is possible to induce many reactions other than those mentioned above.

Another combinations include collisions of protons, as high energy projectile particles **3** with high energy, with the nuclei of ¹⁶O of the precursor **21** and/or **22** and/or **23.** The collision may induce a nuclear reaction of ¹⁶O(p,α)¹³N, wherein ¹³N is a short half-life radioisotope that may further decay by alpha decay.

In another embodiment, protons, as accelerated projectile particles **3,** collide with a nuclear target **1** containing nuclei ¹⁸O of the precursor **21** and/or **22** and/or **23,** thereby inducing a nuclear fusion ¹⁸O(p, n)¹⁸F, wherein ¹⁸F is a radioisotope with a half-life of 109 minutes.

In another example, protons, as accelerated projectile particles **3,** collide with a nuclear target **1** containing ¹⁰B, which induces a nuclear reaction of ¹⁰B(p,α)⁷Be, wherein ⁷Be is a radioisotope with a half-life of 53 days.

In another example, protons, as accelerated projectile particles **3,** collide with a nuclear target **1** containing ¹⁵N, which induces a nuclear reaction of ¹⁵N(p,n)¹⁵O, wherein ¹⁵O is a radioisotope with a short half-life.

By using other projectile particles **3,** or using another laser target **5,** it is possible to generate positive ion projectile particles **3.** In a certain embodiment, it may be a high-energy deuteron falling into the hollow **12** of the nuclear target **1** containing the nuclei of ¹²C of the precursor **21** and/or **22** and/or **23** which may induce a nuclear reaction of ¹²C(d,n)¹³N, wherein ¹³N is a radioisotope with a short half-life.

In another example, the collision of deuterons, as accelerated projectile particles **3,** with the nucleus of ¹⁴N of the precursor **21** and/or **22** and/or **23** may induce a nuclear reaction of ¹⁴N(d,n)¹⁵O, wherein ¹⁵O is a radioisotope with a short half-life.

In another example, the collision of deuterons, as accelerated projectile particles **3,** with the nucleus of ²⁰Ne of the precursor **21** and/or **22** and/or **23** may induce a nuclear reaction of ²⁰Ne(d,α)¹⁸F, wherein ¹⁸F is a radioisotope with a short half-life.

In other examples, a neutron can be used as the projectile particle **3,** wherein it can either be accelerated by a two-stage laser target **5,** where protons generated in the first laser target fall on the second laser target made of, for instance, LiF. Further, as part of the deuteron, stripping reactions are used in the reactions with the precursor **21** and/or **22** and/or **23,** neutrons can be produced directly in the hollow **12,** for example by means of ²H(d,n)³He, ²H(d,n+p)²H reactions and, in particular, ³H(d,n)⁴He.

In another embodiment, neutrons can also be used as projectile particles **3** for nuclear fission according to the scheme by means of the ²H(d,n)³He, ²H(d,n+p)²H reactions and, in particular, ³H(d,n)⁴He.

In another example, the nuclear target **1** can be enriched with nuclei of burnt nuclear fuel or made from the material of burnt nuclear fuel, wherein a tritium precursor **23** bombarded with projectile particles **3** - deuterons - is placed in the hollow **12**, forming a neutron pulse that fissions nuclei of heavy nuclei in ²³³U(n,fission), ²³⁵U(n, fission), ²³⁹Pu(n,fission) reactions.

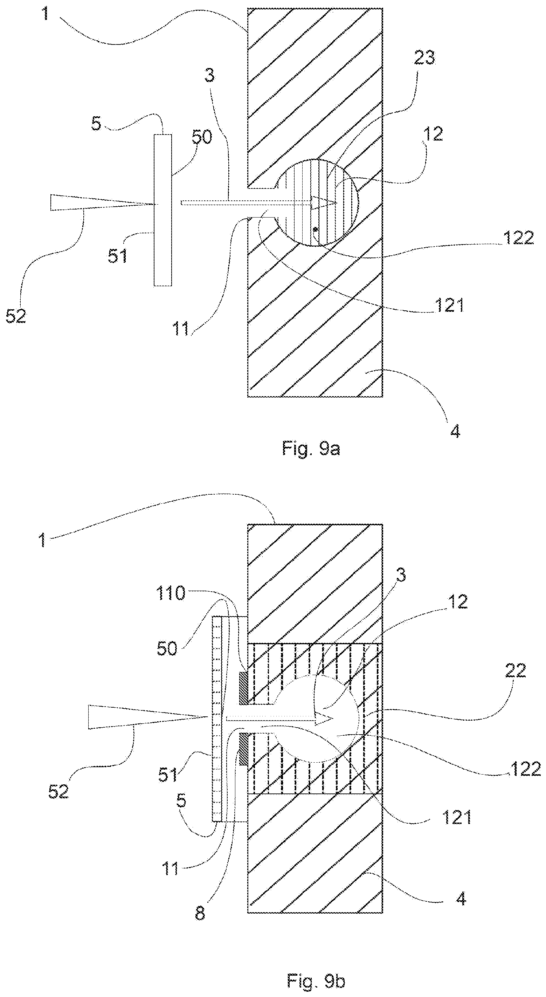

Figure 9a schematically illustrates a laser-controlled particle beam emitting accelerator which irradiates the laser target **5** with laser pulses **52.** The laser target **5** consists of a reversed layer **51** which is exposed to the laser pulse **52,** with the laser target **5** being provided with a layer **50** generating accelerated projectile particles **3** towards the hollow **12** of the nuclear target **1** by the TNSA mechanism. The accelerated projectile particles **3** pass into the hollow **12** through the opening **11,** through the narrower part **121** of the hollow **12** into the wider part **122** of the hollow **12.** In the hollow **12,** the projectile particles **3** either collide with the nuclei of the precursor **23** or elastically scatter on isotopes **4.** The narrower part **121** of the hollow **12** prevents the backscattered projectile particles **31** from leaving the hollow **12.** In the example according to Figure 9a, the nuclear target **1** is separated from the laser target **5,** which is part of the laser accelerator.

In another example of the embodiment - schematically illustrated according to Fig. 9b, it is possible to pre-equip the nuclear target **1** with a laser target **5,** i.e. fix strongly to the nuclear target **1** so that projectile particles **3** are emitted from the laser target **5,** after the laser pulse **52** strikes it, into the hollow **12** of the nuclear target **1.** In the example according to Fig. 9b, the device is further equipped with a nuclear target **1** comprising a luminophore **8** which is deposited on the outer side **110** of the opening **11.** Hence, the layer **50** emitting the projectile particles does not have to be part of the accelerator and can be supplied together with the nuclear target **1** as one product. The pre-configured laser target **5** provides the advantage of at least partially shielding the electromagnetic pulse caused by the high-power pulsed laser. This arrangement also allows the use of liquid precursors **23.**

### Experimental example

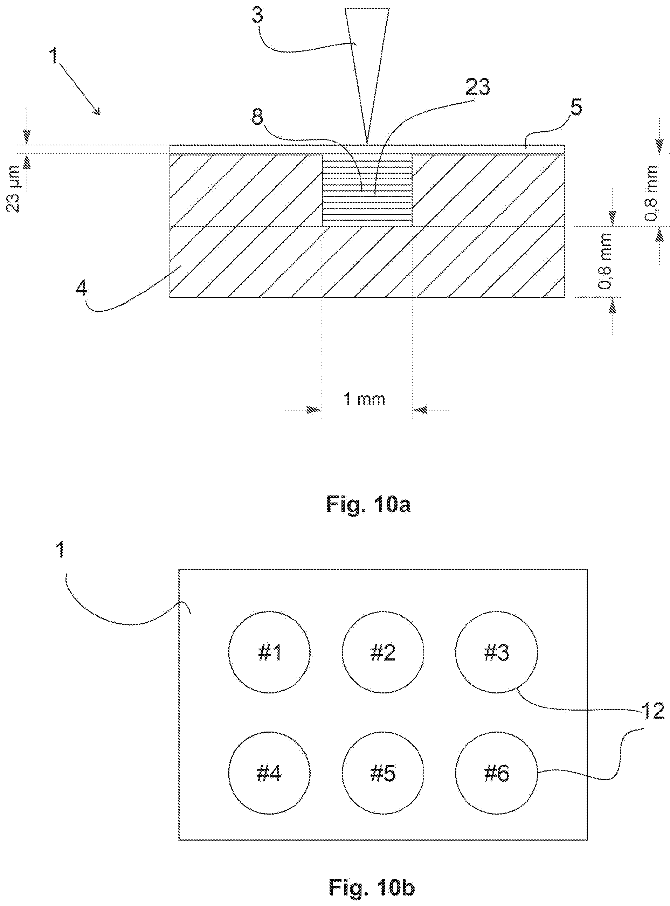

An experimental setup was dedicated to behaviour of the nuclear target according to the present invention. A schematic drawings corresponding to the experimental proof are shown in **Figs. 10a** and **10b****.**

The experimental setup, as shown in **Fig. 10a****,** comprises a matrix of six nuclear targets made of tungsten. Each nuclear target comprises cylindrically shaped hollow with 1 mm diameter and 0.8 mm depth as shown in **Fig. 10a****.** The total thickness of the nuclear target was 1.6 mm. The hollows were covered by MYLAR foil of thickness 23 µm. Each hollow comprises a precursor and was filled with coumarin, which produces luminescence under UV light. Schematic drawing of the nuclear target with a matrix of hollows is shown in **Fig. 10b****.** The following table represents the numbering of hollows as schematically shown in **Fig. 10b** and the laser shots performed on the respective hollow of the nuclear target. The laser pulses (30 fs) with moderate laser contrast 10⁻⁹ provided non-relativistic intensities (≈ 10¹⁷ W/cm²). The laser pulse energy used was either 6 or 10 Joule as indicated in the table.

| | | |
|---|---|---|
| #1 - 6 J laser shot | #2 - 6 J laser shot (cavity mostly missed) | #3 - no shot |
| #4 - 10 J laser shot | #5 - 10 J laser shot | #6 - 10 J laser shot |

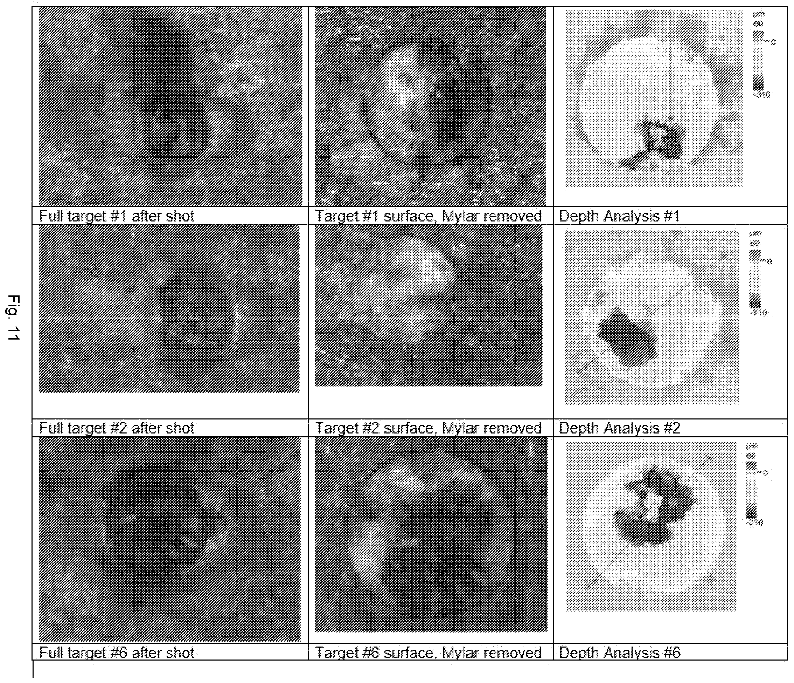

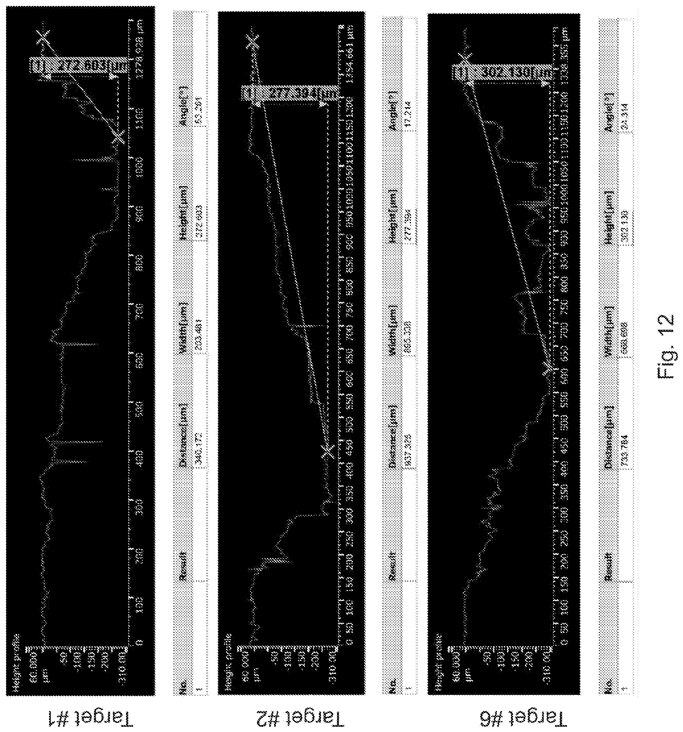

In the experiment, the laser shots were directed to the hollows covered by MYLAR foil. According to the inventor's observation, the laser shots do not produce any effect of the tungsten surface of the nuclear target, irrespective of the energy of the laser pulse. It was especially evident on target #2, where laser shot missed the hollow and hit tungsten surface. The coumarin fill was not ejected from the hollow by laser shot, therefore it can be efficiently used for monitoring of nuclear reaction therein. The powdery target material with low atomic number Z allows sufficiently long mean free path for re-scattering of both projectile and secondary particles, which leads to dissipation of beam energy within certain volume of the target. Contrary to this, high Z tungsten body of the target with large Coulomb barrier reflects the beam particles without any apparent changes of the target body at given beam parameters. The inventor further provides post-experimental analysis for each hollow, which was intended for a shot. The representative examples are shown in **Fig. 11****.** **Fig. 12** shows depth analysis of the respective targets according to the lines shown in **Fig. 11****.**

### Industrial Applicability

The present invention finds application in several industries, as, to some extent, it represents a universal method for inducing nuclear reactions. In a certain industrial application, the present invention can be used for producing radioisotopes, particularly radiopharmaceuticals. In another industrial application, the present invention can be used for transmutation of burnt nuclear fuel so that hazardous nuclear waste is converted to stable isotopes, or at least isotopes with a short half-life. In a third, but not last, industrial application, the present invention can be used to produce heat from a controlled nuclear reaction.

**Reference Signs List**

| | |
|---|---|
| 1 | Nuclear target |
| 11 | Opening |
| 110 | Outer side of the opening |
| 12 | Hollow |
| 121 | First part of the hollow having a narrower cross-section |
| 122 | Second part of the hollow having an enlarged cross-section |
| 123 | Inner side of the hollow |
| 13 | Nuclear target segment |
| 21 | Precursor implanted in the material of the nuclear target around the hollow |
| 22 | Precursor forming the hollow |
| 23 | Precursor in the hollow |
| 3 | Projectile particle |
| 31 | Backscattered particles |
| 32 | Layer providing secondary projectile particles |
| 320 | Secondary projectile particles |
| 301 | Synchrotron |
| 4 | Isotope |
| 5 | Laser target |
| 50 | Layer emitting projectile particles |
| 51 | Reverse side of the layer 5 exposed to laser beam |
| 52 | Laser pulse |
| 6 | Vacuum pump |
| 7 | Shift in direction |
| 8 | Luminophore |
| 81 | Emission (macroscopic) particles direction |
| 9 | Heat |
| 91 | Heat exchanger |
| 92 | Containment |

## Claims

1. A nuclear target (1) forming a bulk, wherein the nuclear target (1) comprises at least one precursor (21 and/or 22 and/or 23) capable of inducing a nuclear reaction upon interaction with a projectile particle (3), wherein the nuclear target (1) comprises:
- at least one opening (11) for the passage of a beam of projectile particles (3); and
- a hollow (12) in the bulk of the nuclear target (1) located behind the opening (11), wherein
- the hollow (12) comprises and/or is formed and/or is surrounded by the precursor (21 and/or 22 and/or 23); and wherein
- the nuclear target (1) comprises at least one isotope (4) on which the projectile particle (3) can be elastically scattered **characterized in that** the hollow (12) is divided to at least two parts, wherein the first part is consisting of a narrower passage and the second part is consisting of a wider and larger space, for trapping the projectile particles in the hollow (12) and for limiting backscattered projectile particles (3).

2. The nuclear target according to claim 1, **characterized in that,** the isotope (4) on which the projectile particle (3) is elastically scattered is:
- isotope (4) being different nuclei from the nuclei of the precursor (21 and/or 22 and/or 23); or
- isotope (4) being the same nuclei as the nuclei of the precursor (21 and/or 22 and/or 23), wherein the impinging projectile particle (3) has kinetic energy, which differs over the threshold energy for induction of the nuclear reaction.

3. The nuclear target (1) according to anyone of the preceding claims, **characterized in that,** at least part of the nuclear target (1) is formed by the precursor (22) surrounding the hollow (12) and/or comprises the precursor (23) in the hollow (12).

4. The nuclear target (1) according to anyone of the preceding claims, **characterized in that,** the nuclear target (1) comprises at least two same precursors (21 and/or 22 and/or 23) or different precursors (21 and/or 22 and/or 23) differently located therein.

5. The nuclear target (1) according to anyone of the claims 1 - 3, **characterized in that,** the nuclear target (1) consists of two isotopes, wherein the first isotope is the precursor (21 and/or 22 and/or 23) and the second isotope is the isotope (4) on which the projectile particle (3) is elastically scattered.

6. The nuclear target (1) according to anyone of the preceding claims, **characterized in that,** the nuclear target (1) is further equipped with a laser target (5) capable of emitting projectile particles (3) after interaction with laser radiation.

7. The nuclear target (1) according to any one of the preceding claims, **characterized in that,** the inner side (123) of the hollow (12) is provided with a layer (32) of the material and/or the hollow (12) comprises the material emitting secondary projectile particles (320) in the case of interaction of a projectile particle (3) or another particle produced by the interaction in the hollow (12).

8. The nuclear target (1) according to any one of the preceding claims, **characterized in that,** the nuclear target (1) is provided with a plurality of openings (11) and a corresponding number of hollows (12).

9. The nuclear target (1) according to any one of the preceding claims, **characterized in that,** the opening (11) and/or a part of the hollow (12) is provided with luminophore (8) and/or scintillator.

10. The nuclear target (1) according to any one of the preceding claims, **characterized in that,** the nuclear target (1) consists of plurality of segments (13) configured so that, the segments form a single bloc of material, wherein the shape of the hollow (12) is configured for suppression of scattering of the projectile particles (3) outside an area of the hollow (12).

11. A method for inducing a nuclear reaction comprising the steps of:
- providing a beam of projectile particles (3) impinging on the nuclear target (1) according to any one of the preceding claims;
**characterized in that**
- the beam of projectile particles (3) is focused into the hollow (12) of said nuclear target (1); wherein
- the projectile particles (3) are elastically scattered on the nuclei of at least one isotope (4) inside the hollow (12) of the nuclear target (1) until the projectile particles (3) interact with the precursor (21 and/or 22 and/or 23).

12. The method for inducing a nuclear reaction according to claim 11, **characterized in that,** the projectile particles (3) are generated by a laser-driven accelerator.

13. A method for producing radioisotopes, **characterized in that,** the method comprises the method for inducing a nuclear reaction according to claim 11 or 12, wherein the projectile particle (3) is selected from the group *p, d, n* and the precursor (21 and/or 22 and/or 23) is selected from the group ²H, ³H, ¹⁰B and/or ¹¹B or ^{Nat}B, ⁹⁹Mo, ¹⁸⁶W, ¹⁸⁵Re, ¹⁸⁷Re or a natural mixture of ^{Nat}Re, wherein the combination of projectile particles (3) and precursors (21 and/or 22 and/or 23) is preferably selected to induce nuclear reactions of ¹¹B(p,n)¹¹C, ⁹⁸Mo(p, n)^{99m}Tc, ¹⁸⁶W(p,n)¹⁸⁶Re, or ²H(d,n)³He a ²H(d,n+p)²H for neutron production followed by ⁹⁸Mo(n,γ)^{99m}Tc, ¹⁸⁵Re(n, γ)¹⁸⁶Re , ¹⁸⁷Re(n, γ)¹⁸⁸Re reactions.

14. A method for nuclear waste transmutation, **characterized in that,** the method comprises the method for producing radioisotopes according to claim 11 or 12, wherein the projectile particle (3) is selected from the group consisting of p, d, n and the precursor (21 and/or 22 and/or 23) is selected from nuclear waste products, wherein the combination of projectile particles (3) and precursors (21 and/or 22 and/or 23) is preferably selected so that the following nuclear ²³³U(p,fission), ²³⁵U(p,fission), ²³⁹Pu(p,fission) and particularly ²³³U(n,fission), ²³⁵U(n,fission), ²³⁹Pu(n,fission), or ⁶⁰Co(n,γ)⁶¹Co, and wherein during neutron fission their production also occurs upon interaction with the precursor (21 and/or 22 and/or 23), particularly ²H(d,n)³He and/or ²H(d,n+p)²H, or ²H(d,p)³H reactions and subsequently ²H(t,n)⁴He reaction, or directly in reaction ³H(d,n)⁴He when ³H is used as a precursor (21 and/or 22 and/or 23).

15. A method for inducing an exothermic nuclear reaction, **characterized in that,** the method comprises the method for inducing a nuclear reaction according to claim 11 or 12 wherein the nuclear reactions are selected from the group: ³He(d,p)⁴He, ⁶Li(d,α)⁴He, ⁷Li(p,α)⁴He, ¹⁰B(p,α)⁷Be, ¹¹B(p,2α)⁴He, ¹⁵N(p,α)¹²C, ⁶Li(p,³He)⁴He followed by secondary reactions ⁶Li(³He,2α)¹H and ³He(³He,2p)⁴He, ³H(d,n)⁴He, ²H(t,n)⁴He, ²H(n,γ)³H, ⁶Li(n,³He)⁴He, ¹⁰B(n,α)⁷Li, ⁷Be(n,p)⁷Li, ¹³C(n,γ)¹⁴C, ¹⁴N(n,p)¹⁴C, ¹⁷O(n,α)¹⁴C, ²¹Ne(n,α)¹⁸O, ²²Na(n,p)²²Ne or ³⁷Ar(n,α)³⁴S.

16. A method for recovering heat from an exothermic nuclear reaction, **characterized in that,** the method comprises the method of claim 14 or 15, wherein the heat (9) is conducted to a heat exchanger (91).

17. The method according to any one of claims 11 - 16, **characterized in that,** the projectile particles (3) emitted from the laser target (5) are sequentially impinging into the hollow (12) of the nuclear target (1) by weight and/or mass-to-charge ratio of the projectile particle (3).

18. A device suitable for the production of radioisotopes, wherein the device comprises a source of projectile particles (3) adjustable so that the projectile particles (3) fall on the hollow (12) of a nuclear target (1), **characterized in that,** the nuclear target (1) is the nuclear target (1) according to any one of claims 1-10.

19. The device suitable for the production of radioisotopes according to claim 13, **characterized in that,** the device comprises a laser target (5) capable of emitting projectile particles (3) after being struck by a laser pulse (52), wherein the laser target (5) is placed in front of the opening (11) of the nuclear target (1) so that the emitted projectile particles (3) fall into the hollow (12) of the nuclear target (1).

## Patentansprüche

1. Ein nukleares Target (1), das einen Massivkörper bildet, wobei das nukleare Target (1) mindestens einen Vorläufer (21 und/oder 22 und/oder 23) umfasst, der geeignet ist, bei Wechselwirkung mit einem Projektilteilchen (3) eine Kernreaktion auszulösen, wobei das nukleare Target (1) umfasst:
- mindestens eine Öffnung (11) für den Durchgang eines Strahls von Projektilteilchen (3); und
- einen Hohlraum (12) in dem Massivkörper des nuklearen Targets (1), der hinter der Öffnung (11) angeordnet ist, wobei
- der Hohlraum (12) den Vorläufer (21 und/oder 22 und/oder 23) umfasst und/oder durch diesen gebildet ist und/oder von diesem umgeben ist; und wobei
- das nukleare Target (1) mindestens ein Isotop (4) umfasst, an dem das Projektilteilchen (3) elastisch gestreut werden kann,
**dadurch gekennzeichnet, dass** der Hohlraum (12) in mindestens zwei Teile unterteilt ist, wobei der erste Teil aus einem engen Durchgang besteht und der zweite Teil aus einem breiteren und größeren Raum besteht, zum Einfangen der Projektilteilchen in dem Hohlraum (12) und zum Begrenzen rückgestreuter Projektilteilchen (3).

2. Das nukleare Target nach Anspruch 1, **dadurch gekennzeichnet, dass** das Isotop (4), an dem das Projektilteilchen (3) elastisch gestreut wird:
- ein Isotop (4) ist, dessen Kerne sich von den Kernen des Vorläufers (21 und/oder 22 und/oder 23) unterscheiden; oder
- ein Isotop (4) ist, dessen Kerne dieselben Kerne wie die Kerne des Vorläufers (21 und/oder 22 und/oder 23) sind, wobei das auftreffende Projektilteilchen (3) eine kinetische Energie aufweist, die über der Schwellenenergie für die Auslösung der Kernreaktion liegt.

3. Das nukleare Target (1) nach einem der vorhergehenden Ansprüche, **dadurch gekennzeichnet, dass** mindestens ein Teil des nuklearen Targets (1) durch den den Hohlraum (12) umgebenden Vorläufer (22) gebildet ist und/oder den Vorläufer (23) in dem Hohlraum (12) umfasst.

4. Das nukleare Target (1) nach einem der vorhergehenden Ansprüche, **dadurch gekennzeichnet, dass** das nukleare Target (1) mindestens zwei gleiche Vorläufer (21 und/oder 22 und/oder 23) oder unterschiedliche Vorläufer (21 und/oder 22 und/oder 23) umfasst, die darin unterschiedlich angeordnet sind.

5. Das nukleare Target (1) nach einem der Ansprüche 1 bis 3, **dadurch gekennzeichnet, dass** das nukleare Target (1) aus zwei Isotopen besteht, wobei das erste Isotop der Vorläufer (21 und/oder 22 und/oder 23) ist und das zweite Isotop das Isotop (4) ist, an dem das Projektilteilchen (3) elastisch gestreut wird.

6. Das nukleare Target (1) nach einem der vorhergehenden Ansprüche, **dadurch gekennzeichnet, dass** das nukleare Target (1) ferner mit einem Lasertarget (5) ausgestattet ist, das nach Wechselwirkung mit Laserstrahlung Projektilteilchen (3) emittieren kann.

7. Das nukleare Target (1) nach einem der vorhergehenden Ansprüche, **dadurch gekennzeichnet, dass** die Innenseite (123) des Hohlraums (12) mit einer Schicht (32) des Materials versehen ist und/oder der Hohlraum (12) das Material umfasst, das im Fall der Wechselwirkung eines Projektilteilchens (3) oder eines anderen durch die Wechselwirkung in dem Hohlraum (12) erzeugten Teilchens sekundäre Projektilteilchen (320) emittiert.

8. Das nukleare Target (1) nach einem der vorhergehenden Ansprüche, **dadurch gekennzeichnet, dass** das nukleare Target (1) mit einer Mehrzahl von Öffnungen (11) und einer entsprechenden Anzahl von Hohlräumen (12) versehen ist.

9. Das nukleare Target (1) nach einem der vorhergehenden Ansprüche, **dadurch gekennzeichnet, dass** die Öffnung (11) und/oder ein Teil des Hohlraums (12) mit einem Luminophor (8) und/oder einem Szintillator versehen ist.

10. Das nukleare Target (1) nach einem der vorhergehenden Ansprüche, **dadurch gekennzeichnet, dass** das nukleare Target (1) aus einer Mehrzahl von Segmenten (13) besteht, die so konfiguriert sind, dass die Segmente einen einzigen Materialblock bilden, wobei die Form des Hohlraums (12) zur Unterdrückung der Streuung der Projektilteilchen (3) außerhalb eines Bereichs des Hohlraums (12) konfiguriert ist.

11. Ein Verfahren zum Auslösen einer Kernreaktion, umfassend die Schritte:
- Bereitstellen eines Strahls von Projektilteilchen (3), der auf das nukleare Target (1) nach einem der vorhergehenden Ansprüche auftrifft;
**dadurch gekennzeichnet, dass**
- der Strahl von Projektilteilchen (3) in den Hohlraum (12) des genannten nuklearen Targets (1) fokussiert wird; wobei
- die Projektilteilchen (3) an den Kernen mindestens eines Isotops (4) innerhalb des Hohlraums (12) des nuklearen Targets (1) elastisch gestreut werden, bis die Projektilteilchen (3) mit dem Vorläufer (21 und/oder 22 und/oder 23) wechselwirken.

12. Das Verfahren zum Auslösen einer Kernreaktion nach Anspruch 11, **dadurch gekennzeichnet, dass** die Projektilteilchen (3) durch einen lasergetriebenen Beschleuniger erzeugt werden.

13. Ein Verfahren zur Herstellung von Radioisotopen, **dadurch gekennzeichnet, dass** das Verfahren das Verfahren zum Auslösen einer Kernreaktion nach Anspruch 11 oder 12 umfasst, wobei das Projektilteilchen (3) aus der Gruppe p, d, n ausgewählt ist und der Vorläufer (21 und/oder 22 und/oder 23) aus der Gruppe ²H, ³H, ¹⁰B und/oder ¹¹B oder NatB, ⁹⁹Mo, ¹⁸⁶W, ¹⁸⁵Re, ¹⁸⁷Re oder einem natürlichen Gemisch von NatRe ausgewählt ist, wobei die Kombination von Projektilteilchen (3) und Vorläufern (21 und/oder 22 und/oder 23) vorzugsweise so ausgewählt ist, dass Kernreaktionen von ¹¹B(p,n)¹¹C, ⁹⁸Mo(p,n)^{99m}Tc, ¹⁸⁶W(p,n)¹⁸⁶Re oder ²H(d,n)³He und ²H(d,n+p)²H zur Neutronenerzeugung, gefolgt von ⁹⁸Mo(n,γ)⁹⁹mTc-, ^{1es}Re(n,γ)¹⁸⁶Re- und ¹⁸⁷Re(n,γ)¹⁸⁸Re-Reaktionen, induziert werden.

14. Ein Verfahren zur Transmutation nuklearer Abfälle, **dadurch gekennzeichnet, dass** das Verfahren das Verfahren zur Herstellung von Radioisotopen nach Anspruch 11 oder 12 umfasst, wobei das Projektilteilchen (3) aus der Gruppe bestehend aus p, d, n ausgewählt ist und der Vorläufer (21 und/oder 22 und/oder 23) aus nuklearen Abfallprodukten ausgewählt ist, wobei die Kombination von Projektilteilchen (3) und Vorläufern (21 und/oder 22 und/oder 23) vorzugsweise so ausgewählt ist, dass die folgenden Kernreaktionen ²³³U(p,fission), ²³⁵U(p,fission), ²³⁹Pu(p,fission) und insbesondere ²³³U(n,fission), ²³⁵U(n,fission), ²³⁹Pu(n,fission) oder ⁶⁰Co(n,γ)⁶¹Co stattfinden, und wobei während der Neutronenspaltung deren Erzeugung auch bei Wechselwirkung mit dem Vorläufer (21 und/oder 22 und/oder 23) erfolgt, insbesondere durch ²H(d,n)³He- und/oder ²H(d,n+p)²H- oder ²H(d,p)³H-Reaktionen und anschließend die ²H(t,n)⁴He-Reaktion, oder direkt in der Reaktion ³H(d,n)⁴He, wenn ³H als Vorläufer (21 und/oder 22 und/oder 23) verwendet wird.

15. Ein Verfahren zum Auslösen einer exothermen Kernreaktion, **dadurch gekennzeichnet, dass** das Verfahren das Verfahren zum Auslösen einer Kernreaktion nach Anspruch 11 oder 12 umfasst, wobei die Kernreaktionen aus der folgenden Gruppe ausgewählt sind: ³He(d,p)⁴He, ⁶Li(d,α)⁴He, ⁷Li(p,α)⁴He, ¹⁰B(p,α)⁷Be, ¹¹B(p,2α)⁴He, ¹⁶N(p,α)¹²C, ⁶Li(p,³He)⁴He, gefolgt von sekundären Reaktionen ⁶Li(³He,2α)¹H und ³He(³He,2p)⁴He, ³H(d,n)⁴He, ²H(t,n)⁴He, ²H(n,γ)³H, ⁶Li(n,³He)⁴He, ¹⁰B(n,α)⁷Li, ⁷Be(n,p)⁷Li, ¹³C(n,γ)¹⁴C, ¹⁴N(n,p)¹⁴C, ¹⁷O(n,α)¹⁴C, ²¹Ne(n,α)¹⁸O, ²²Na(n,p)²²Ne oder ³⁷Ar(n,α)³⁴S.

16. Ein Verfahren zur Rückgewinnung von Wärme aus einer exothermen Kernreaktion, **dadurch gekennzeichnet, dass** das Verfahren das Verfahren nach Anspruch 14 oder 15 umfasst, wobei die Wärme (9) zu einem Wärmetauscher (91) geleitet wird.

17. Das Verfahren nach einem der Ansprüche 11 bis 16, **dadurch gekennzeichnet, dass** die vom Lasertarget (5) emittierten Projektilteilchen (3) entsprechend dem Gewicht und/oder dem Masse-zu-Ladung-Verhältnis des Projektilteilchens (3) sequentiell in den Hohlraum (12) des nuklearen Targets (1) auftreffen.

18. Eine Vorrichtung, die zur Herstellung von Radioisotopen geeignet ist, wobei die Vorrichtung eine Quelle von Projektilteilchen (3) umfasst, die so einstellbar ist, dass die Projektilteilchen (3) auf den Hohlraum (12) eines nuklearen Targets (1) auftreffen, **dadurch gekennzeichnet, dass** das nukleare Target (1) das nukleare Target (1) nach einem der Ansprüche 1 bis 10 ist.

19. Die Vorrichtung, die zur Herstellung von Radioisotopen geeignet ist, nach Anspruch 13, **dadurch gekennzeichnet, dass** die Vorrichtung ein Lasertarget (5) umfasst, das nach Beaufschlagung mit einem Laserpuls (52) Projektilteilchen (3) emittieren kann, wobei das Lasertarget (5) vor der Öffnung (11) des nuklearen Targets (1) angeordnet ist, so dass die emittierten Projektilteilchen (3) in den Hohlraum (12) des nuklearen Targets (1) gelangen.

## Revendications

1. Une cible nucléaire (1) formant un corps massif, dans laquelle la cible nucléaire (1) comprend au moins un précurseur (21 et/ou 22 et/ou 23) apte à induire une réaction nucléaire lors d'une interaction avec une particule projectile (3), dans laquelle la cible nucléaire (1) comprend :
- au moins une ouverture (11) pour le passage d'un faisceau de particules projectiles (3) ; et
- une cavité (12) dans le corps massif de la cible nucléaire (1), située derrière l'ouverture (11), dans laquelle
- la cavité (12) comprend le précurseur (21 et/ou 22 et/ou 23) et/ou est formée par celui-ci et/ou est entourée par celui-ci ; et dans laquelle
- la cible nucléaire (1) comprend au moins un isotope (4) sur lequel la particule projectile (3) peut être diffusée élastiquement,
**caractérisée en ce que** la cavité (12) est divisée en au moins deux parties, dans laquelle la première partie consiste en un passage étroit et la deuxième partie consiste en un espace plus large et plus grand, pour piéger les particules projectiles dans la cavité (12) et pour limiter les particules projectiles rétrodiffusées (3).

2. La cible nucléaire selon la revendication 1, **caractérisée en ce que** l'isotope (4) sur lequel la particule projectile (3) est diffusée élastiquement est :
- un isotope (4) dont les noyaux sont différents des noyaux du précurseur (21 et/ou 22 et/ou 23) ; ou
- un isotope (4) dont les noyaux sont les mêmes que les noyaux du précurseur (21 et/ou 22 et/ou 23), dans laquelle la particule projectile incidente (3) possède une énergie cinétique supérieure à l'énergie seuil d'induction de la réaction nucléaire.

3. La cible nucléaire (1) selon l'une quelconque des revendications précédentes, **caractérisée en ce qu'**au moins une partie de la cible nucléaire (1) est formée par le précurseur (22) entourant la cavité (12) et/ou comprend le précurseur (23) dans la cavité (12).

4. La cible nucléaire (1) selon l'une quelconque des revendications précédentes, **caractérisée en ce que** la cible nucléaire (1) comprend au moins deux précurseurs identiques (21 et/ou 22 et/ou 23) ou des précurseurs différents (21 et/ou 22 et/ou 23) disposés différemment dans celle-ci.

5. La cible nucléaire (1) selon l'une quelconque des revendications 1 à 3, **caractérisée en ce que** la cible nucléaire (1) consiste en deux isotopes, dans laquelle le premier isotope est le précurseur (21 et/ou 22 et/ou 23) et le deuxième isotope est l'isotope (4) sur lequel la particule projectile (3) est diffusée élastiquement.

6. La cible nucléaire (1) selon l'une quelconque des revendications précédentes, **caractérisée en ce que** la cible nucléaire (1) est en outre équipée d'une cible laser (5) capable d'émettre des particules projectiles (3) après interaction avec un rayonnement laser.

7. La cible nucléaire (1) selon l'une quelconque des revendications précédentes, **caractérisée en ce que** la face intérieure (123) de la cavité (12) est pourvue d'une couche (32) du matériau et/ou la cavité (12) comprend le matériau émettant des particules projectiles secondaires (320) en cas d'interaction d'une particule projectile (3) ou d'une autre particule produite par l'interaction dans la cavité (12).

8. La cible nucléaire (1) selon l'une quelconque des revendications précédentes, **caractérisée en ce que** la cible nucléaire (1) est pourvue d'une pluralité d'ouvertures (11) et d'un nombre correspondant de cavités (12).

9. La cible nucléaire (1) selon l'une quelconque des revendications précédentes, **caractérisée en ce que** l'ouverture (11) et/ou une partie de la cavité (12) est pourvue d'un luminophore (8) et/ou d'un scintillateur.

10. La cible nucléaire (1) selon l'une quelconque des revendications précédentes, **caractérisée en ce que** la cible nucléaire (1) consiste en une pluralité de segments (13) configurés de sorte que les segments forment un seul bloc de matériau, la forme de la cavité (12) étant configurée pour supprimer la diffusion des particules projectiles (3) en dehors d'une zone de la cavité (12).

11. Un procédé d'induction d'une réaction nucléaire comprenant les étapes consistant à :
- fournir un faisceau de particules projectiles (3) incident sur la cible nucléaire (1) selon l'une quelconque des revendications précédentes ;
**caractérisé en ce que**
- le faisceau de particules projectiles (3) est focalisé dans la cavité (12) de ladite cible nucléaire (1) ; dans lequel
- les particules projectiles (3) sont diffusées élastiquement sur les noyaux d'au moins un isotope (4) à l'intérieur de la cavité (12) de la cible nucléaire (1) jusqu'à ce que les particules projectiles (3) interagissent avec le précurseur (21 et/ou 22 et/ou 23).

12. Le procédé d'induction d'une réaction nucléaire selon la revendication 11, **caractérisé en ce que** les particules projectiles (3) sont générées par un accélérateur entraîné par laser.

13. Un procédé de production de radioisotopes, **caractérisé en ce que** le procédé comprend le procédé d'induction d'une réaction nucléaire selon la revendication 11 ou 12, dans lequel la particule projectile (3) est choisie dans le groupe p, d, n et le précurseur (21 et/ou 22 et/ou 23) est choisi dans le groupe ²H, ³H, ¹⁰B et/ou ¹¹B ou NatB, ⁹⁹Mo, ¹⁸⁶W, ¹⁸⁵Re, ¹⁸⁷Re ou un mélange naturel de NatRe, dans lequel la combinaison de particules projectiles (3) et de précurseurs (21 et/ou 22 et/ou 23) est de préférence choisie pour induire les réactions nucléaires ¹¹B(p,n)¹¹C, ⁹⁸Mo(p,n)^{99m}Tc, ¹⁸⁶W(p,n)¹⁸⁶Re, ou ²H(d,n)³He et ²H(d,n+p)²H pour la production de neutrons suivie des réactions ⁹⁸Mo(n,γ)^{99m}Tc, ¹⁸⁵Re(n,γ)¹⁸⁶Re, ¹⁸⁷Re(n,γ)¹⁸⁸Re.

14. Un procédé de transmutation de déchets nucléaires, **caractérisé en ce que** le procédé comprend le procédé de production de radioisotopes selon la revendication 11 ou 12, dans lequel la particule projectile (3) est choisie dans le groupe constitué de p, d, n et le précurseur (21 et/ou 22 et/ou 23) est choisi parmi des produits de déchets nucléaires, dans lequel la combinaison de particules projectiles (3) et de précurseurs (21 et/ou 22 et/ou 23) est de préférence choisie de sorte que les réactions nucléaires suivantes ²³³U(p,fission), ²³⁵U(p,fission), ²³⁹Pu(p,fission) et en particulier ²³³U(n,fission), ²³⁵U(n,fission), ²³⁹Pu(n,fission), ou ⁶⁰Co(n,γ)⁶¹CO se produisent, et dans lequel, pendant la fission neutronique, leur production intervient également lors de l'interaction avec le précurseur (21 et/ou 22 et/ou 23), en particulier les réactions ²H(d,n)³He et/ou ²H(d,n+p)²H et/ou ²H(d,p)³H, puis la réaction ²H(t,n)⁴He, ou directement dans la réaction ³H(d,n)⁴He lorsque ³H est utilisé comme précurseur (21 et/ou 22 et/ou 23).

15. Un procédé d'induction d'une réaction nucléaire exothermique, **caractérisé en ce que** le procédé comprend le procédé d'induction d'une réaction nucléaire selon la revendication 11 ou 12, dans lequel les réactions nucléaires sont choisies dans le groupe : ³He(d,p)⁴He, ⁶Li(d,α)⁴He, ⁷Li(p,α)⁴He, ¹⁰B(p,α)⁷Be, ¹¹B(p,2α)⁴He, ¹⁵N(p,α)¹²C, ⁶Li(p,³He)⁴He suivies des réactions secondaires ⁶Li(³He,2α)¹H et ³He(³He,2p)⁴He, ³H(d,n)⁴He, ²H(t,n)⁴He, ²H(n,γ)³H, ⁶Li(n,³He)⁴He, ¹⁰B(n,α)⁷Li, ⁷Be(n,p)⁷Li, ¹³C(n,γ)¹⁴C, ¹⁴N(n,p)¹⁴C, ¹⁷O(n,α)¹⁴C, ²¹Ne(n,α)¹⁸O, ²²Na(n,p)²²Ne ou ³⁷Ar(n,α)³⁴S.

16. Un procédé de récupération de chaleur à partir d'une réaction nucléaire exothermique, **caractérisé en ce que** le procédé comprend le procédé de la revendication 14 ou 15, dans lequel la chaleur (9) est conduite vers un échangeur de chaleur (91).

17. Le procédé selon l'une quelconque des revendications 11 à 16, **caractérisé en ce que** les particules projectiles (3) émises par la cible laser (5) sont incidentes séquentiellement dans la cavité (12) de la cible nucléaire (1) en fonction du poids et/ou du rapport masse/charge de la particule projectile (3).

18. Un dispositif adapté à la production de radioisotopes, dans lequel le dispositif comprend une source de particules projectiles (3) réglable de sorte que les particules projectiles (3) tombent sur la cavité (12) d'une cible nucléaire (1), **caractérisé en ce que** la cible nucléaire (1) est la cible nucléaire (1) selon l'une quelconque des revendications 1 à 10.

19. Le dispositif adapté à la production de radioisotopes selon la revendication 13, **caractérisé en ce que** le dispositif comprend une cible laser (5) capable d'émettre des particules projectiles (3) après avoir été frappée par une impulsion laser (52), dans lequel la cible laser (5) est placée devant l'ouverture (11) de la cible nucléaire (1) de sorte que les particules projectiles émises (3) tombent dans la cavité (12) de la cible nucléaire (1).
